# EUROPÄISCHE PATENTSCHRIFT

(11) **EP 4 473 830 B1**
(45) Veröffentlichungstag und Bekanntmachung des Hinweises auf die Patenterteilung: **25.03.2026**
(21) Anmeldenummer: 24180670.2
(22) Anmeldetag: 07.06.2024
(51) Int. Cl.: A01K 39/01, B65G 19/08

(54) **VORRICHTUNG UND VERFAHREN ZUR UMLENKUNG EINER FÖRDERKETTE SOWIE TIERFUTTERMITTELTRANSPORTSYSTEM**
DEVICE AND METHOD FOR DEFLECTING A CONVEYOR CHAIN AND ANIMAL FEED TRANSPORT SYSTEM
DISPOSITIF ET PROCÉDÉ DE DÉVIATION D'UNE CHAÎNE TRANSPORTEUSE ET SYSTÈME DE TRANSPORT D'ALIMENTATION ANIMALE

(30) Priorität: 08.06.2023 LU 504453
(43) Veröffentlichungstag der Anmeldung: 11.12.2024
(73) Patentinhaber: Big Dutchman International GmbH, 49377 Vechta (DE)
(72) Erfinder: Mann, Leon, 49377 Vechta (DE)
(74) Vertreter: Eisenführ Speiser

(56) Entgegenhaltungen:
- WO-A1-2015/096522
- DE-A1- 10 022 003
- DE-A1- 3 302 047
- DE-B- 1 193 423
- TW-U- M 460 526
- GEORGIA POULTRY EQUIPMENT CO.: "Poultry Feed Systems", 31 May 2023 (2023-05-31), pages 1 - 16, XP093102144, Retrieved from the Internet <URL:https://www.hogslat.com/global/flyers/georgia-poultry-feed-systems-equipment-information-flyer/> [retrieved on 20231116]
- BIG DUTCHMAN: "EuroTier digital 2021: neuer Kettenspanner, verst�rkte 90 Grad-Umlaufecke und mehr", 23 January 2021 (2021-01-23), pages 1 - 2, XP093102127, Retrieved from the Internet <URL:https://www.bigdutchman.de/de/gefluegelmast/aktuelles/pressemitteilungen/detail/kettenfuetterung-elterntierhaltung-modifkationen/> [retrieved on 20231116]
- BIG DUTCHMAN: "Automatische Kettenf�tterung f�r die moderne Gefl�gelhaltung", 31 December 2015 (2015-12-31), pages 1 - 4, XP093102115, Retrieved from the Internet <URL:https://cdn.bigdutchman.de/fileadmin/content/egg-poultry/products/de/Legenhennenhaltung-Gefluegelmast-Automatische-Kettenfuetterung-Big-Dutchman-de.pdf> [retrieved on 20231116]

## Beschreibung

Die Erfindung betrifft eine Vorrichtung zur Umlenkung einer Förderkette zum Transport von Tierfuttermittel. Ferner betrifft die Erfindung ein Tierfuttermitteltransportsystem zum Transport von Tierfuttermittel und ein Verfahren zur Umlenkung einer Förderkette, insbesondere zum Transport von Tierfuttermittel. Des Weiteren betrifft die Erfindung eine Verwendung einer solchen Vorrichtung und/oder eines solchen Tierfuttermitteltransportsystems.

Im Bereich der Tierhaltung ist es bekannt, automatisierte Futterfördersysteme einzusetzen, mittels denen Tierfutter automatisiert derart entlang von Tieren gefördert werden kann, dass diese Tiere Zugriff auf das Tierfutter haben. So wird im Bereich der Aufzucht und Haltung von Zuchttieren, beispielsweise im Bereich der Geflügelhaltung, typischerweise eine sogenannte automatisierte Kettenfütterung verwendet.

Bei der automatisierten Kettenfütterung ist typischerweise eine Förderkette vorgesehen, die mittels einer Antriebseinheit angetrieben wird. Eine Förderkette, die mehrere miteinander verbundene Kettenglieder umfasst, ist beispielsweise aus US 2672059 A bekannt. Die Förderkette wird typischerweise durch einen Futterbehälter, in dem sich Tierfutter befindet, hindurchgeführt, sodass die Förderkette bei einer Bewegung durch den Futterbehälter hindurch Tierfutter aus dem Futterbehälter entnimmt. Mittels der Förderkette wird das Tierfutter dann entlang von Futtertrögen durch den Tierhaltungsbereich, also insbesondere durch einen Stall, in dem sich zu fütternde Tiere befinden, bewegt. Die Tiere können dann das Tierfutter aus den Futtertrögen entnehmen. Die üblicherweise endlos ausgebildete Förderkette bewegt sich dabei typischerweise umlaufend auf einer geschlossenen Bahn, die in der Regel im Wesentlichen rechteckig ausgebildet ist. Dazu wird die Förderkette in der Regel an mehreren Positionen umgelenkt.

Die Umlenkung der Förderkette erfolgt dabei mittels Vorrichtungen zur Umlenkung der Förderkette, die auch als Futterecken bezeichnet werden können. In einer typischen Anordnung wird die Förderkette mittels vier solcher Vorrichtungen, also an vier unterschiedlichen Positionen, um jeweils 90° umgelenkt. Solche Vorrichtungen zur Umlenkung der Förderkette sind beispielsweise aus US 3147853 A, US 3444986 A, US 4327828 A, DE 11 93 423 B, TW M 460 526 U sowie der 90°-Ecke mit Umlenkrolle der Georgia Poultry Equipment Company, Royston, GA 30662, gezeigt in: "Poultry Feed Systems", Seiten 1-16, veröffentlicht am 31. Mai 2023, gefunden im Internet unter der URL: https://www.hogslat.com/global/flyers/georgia-poultry-feed-systems-equipmentinformation-flyer, bekannt.

Ein Problem, das bei bekannten Vorrichtungen zur Umlenkung von Förderketten auftritt, besteht darin, dass aufgrund einer Relativbewegung zwischen der Förderkette und der Bodenplatte der Vorrichtung und aufgrund der zwischen der Förderkette und der Bodenpatte wirkenden Kräften die Bodenplatte und/oder die Förderkette innerhalb einer relativ kurzen Zeit verschleißen. Es kann dann vorkommen, dass sich die Förderkette nach einiger Betriebszeit in die Bodenplatte des Gehäuses der Vorrichtungen hineinfrisst. Aufgrund des dadurch entstehenden Verschleißes der Bodenplatte und/oder der Förderkette haben die Vorrichtung und die Förderkette nur eine relativ geringe Lebensdauer, sodass das Gehäuse regelmäßig repariert oder zumindest teilweise ersetzt werden muss und gegebenenfalls auch die Förderkette regelmäßig repariert werden muss. Insbesondere müssen verschlissene Teile typischerweise nach einiger Zeit ausgetauscht werden. Je höher die Fördergeschwindigkeit der Förderkette ist, desto schneller tritt ein solcher, unerwünschter Verschleiß auf.

Ein weiteres Problem, das bei bekannten Vorrichtungen zur Umlenkung von Förderketten auftritt, besteht darin, dass auch an einer im Gehäuse vorgesehenen Führungsschiene ein relativ hoher Verschleiß auftritt, da die Förderkette entlang dieser am Gehäuse angebrachten Führungsschiene bewegt wird und aufgrund der Relativbewegung und der zwischen der Förderkette und der Führungsschiene wirkenden Kräften die Führungsschiene und/oder die Förderkette verschleißen.

Um die Lebensdauer von Vorrichtungen zur Umlenkung von Förderketten zu erhöhen, wurden in der Vergangenheit besonders verschleißfeste Materialien eingesetzt. Dadurch kann zwar der Verschleiß etwas verringert werden, allerdings steigen dadurch auch die Materialkosten für die Vorrichtung an.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, mit der die Lebensdauer einer Vorrichtung zum Umlenken einer Förderkette erhöht werden.

Gemäß einem ersten Aspekt wird die Aufgabe gelöst durch eine Vorrichtung nach Anspruch 1. Danach ist eine Vorrichtung zur Umlenkung, insbesondere zur Umlenkung um 90° oder 135°, einer Förderkette zum Transport von Tierfuttermittel, vorgesehen, die Vorrichtung umfassend ein Gehäuse mit einer ersten Gehäuseöffnung und einer zweiten Gehäuseöffnung, und ein Umlenkrad zum Führen und Umlenken einer Förderkette von der ersten Gehäuseöffnung des Gehäuses zu der zweiten Gehäuseöffnung des Gehäuses, wobei das Umlenkrad innerhalb des Gehäuses zwischen der ersten Gehäuseöffnung und der zweiten Gehäuseöffnung angeordnet ist, und wobei das Umlenkrad drehbar um eine, vorzugsweise vertikale, Rotationsachse gelagert ist.

Erfindungsgemäß ist vorgesehen, dass das Umlenkrad ein erstes Förderkettenführungselement aufweist, das sich ausgehend von einem Außenumfang des Umlenkrads nach radial außen erstreckt, wobei das erste Förderkettenführungselement einen ersten Förderkettenführungsabschnitt aufweist, und das Umlenkrad ein zweites Förderkettenführungselement aufweist, das sich ausgehend von dem Außenumfang des Umlenkrads nach radial außen erstreckt, wobei das zweite Förderkettenführungselement einen zweiten Förderkettenführungsabschnitt aufweist.

Demnach ist vorgesehen, dass das Umlenkrad zwei Förderkettenführungselemente umfasst, die sich in radialer Richtung nach außen erstrecken und die jeweils einen Förderkettenführungsabschnitt aufweisen, sodass eine Förderkette zwischen diesen Förderkettenführungsabschnitten aufgenommen werden kann, wodurch eine Führung der Förderkette innerhalb der Vorrichtung ausschließlich mittels der Förderkettenführungselemente ermöglicht wird.

Die Vorrichtung ist insbesondere dazu ausgebildet, um eine Förderkette umzulenken, vorzugsweise um 90° oder 135°. Die von der Vorrichtung umzulenkende Förderkette ist vorzugsweise endlos ausgebildet und insbesondere zum Transport von Tierfuttermittel ausgebildet.

Die erste Gehäuseöffnung wird vorzugsweise durch einen ersten Gehäuseöffnungsabschnitt ausgebildet. Die erste Gehäuseöffnung ist vorzugsweise ausgebildet, um eine Förderkette durch die erste Gehäuseöffnung hindurchzuführen. Die zweite Gehäuseöffnung wird vorzugsweise durch einen zweiten Gehäuseöffnungsabschnitt ausgebildet. Die zweite Gehäuseöffnung ist vorzugsweise ausgebildet, um eine Förderkette durch die zweite Gehäuseöffnung hindurchzuführen.

Das Umlenkrad, das auch als Kettenrad bezeichnet werden kann, ist vorzugsweise ausgebildet, um eine Förderkette von der ersten Gehäuseöffnung des Gehäuses zu der zweiten Gehäuseöffnung des Gehäuses zu führen und umzulenken. Das Umlenkrad ist vorzugsweise mit dem Gehäuse, insbesondere lösbar, verbunden und drehbar um die Rotationsachse an dem Gehäuse gelagert. Das Umlenkrad ist vorzugsweise rotationssymmetrisch um die Rotationsachse ausgebildet.

Das Umlenkrad ist zwischen der ersten Gehäuseöffnung und der zweiten Gehäuseöffnung innerhalb des Gehäuses angeordnet, wobei vorzugsweise der Abstand zwischen der ersten Gehäuseöffnung und dem Umlenkrad und der Abstand zwischen der zweiten Gehäuseöffnung und dem Umlenkrad gleich sind. Die Vorrichtung kann insbesondere spiegelsymmetrisch bezogen auf eine Spiegelebene, in der die Rotationsachse liegt, ausgebildet sein.

Das erste Förderkettenführungselement und das zweite Förderkettenführungselement erstrecken sich ausgehend von einem Außenumfang des Umlenkrads nach radial außen. Unter dem Außenumfang des Umlenkrads ist insbesondere ein umfänglicher, äußerer Abschnitt des Umlenkrads zu verstehen, von dem aus sich das erste und das zweite Förderkettenführungselement noch weiter nach radial außen erstrecken. Unter einer solchen Erstreckung nach radial außen ist insbesondere zu verstehen, dass sich das erste Förderkettenführungselement und das zweite Förderkettenführungselement zumindest anteilig nach radial außen erstrecken.

Der erste Förderkettenführungsabschnitt und der zweite Förderkettenführungsabschnitt sind vorzugsweise angeordnet und ausgebildet, um die Förderkette an unterschiedlichen Abschnitten der Förderkette zu führen, sodass vorzugsweise die Förderkette zumindest abschnittsweise zwischen dem ersten Förderkettenführungsabschnitt und dem zweiten Förderkettenführungsabschnitt anordenbar ist. Das erste Förderkettenführungselement ist vorzugsweise integral mit dem Umlenkrad, also insbesondere als integraler Bestandteil des Umlenkrads, ausgebildet. Das zweite Förderkettenführungselement ist vorzugsweise integral mit dem Umlenkrad, also insbesondere als integraler Bestandteil des Umlenkrads, ausgebildet.

Das erste Förderkettenführungselement weist einen ersten Förderkettenführungsabschnitt auf. Der erste Förderkettenführungsabschnitt ist vorzugsweise ausgebildet, um einen oberen und/oder radial äußeren Abschnitt der Förderkette zu führen. So kann vorzugsweise die radial äußere Seitenfläche und/oder die Oberseite der Förderkette mittels des ersten Förderkettenführungsabschnitts geführt werden.

Das zweite Förderkettenführungselement weist einen zweiten Förderkettenführungsabschnitt auf. Der zweite Förderkettenführungsabschnitt ist vorzugsweise ausgebildet, um einen unteren und/oder radial inneren Abschnitt der Förderkette zu führen. So kann vorzugsweise die radial innere Seitenfläche und/oder die Unterseite der Förderkette mittels des zweiten Förderkettenführungsabschnitts geführt werden.

Ein Vorteil einer solcher Vorrichtung besteht darin, dass eine Förderkette aufgrund des ersten Förderkettenführungselements und des zweiten Förderkettenführungselements ausschließlich mittels des Umlenkrads geführt und umgelenkt werden kann. Eine Förderkette kann somit insbesondere mittels einer Reibschlussverbindung mit dem Umlenkrad ausschließlich mittels des Umlenkrads, insbesondere mittels der Förderkettenführungselemente, geführt und umgelenkt werden. Durch die Reibschlussverbindung zwischen dem Umlenkrad und der Förderkette besteht keine oder nur eine sehr geringe Relativbewegung zwischen der Förderkette und den mit der Förderkette in Kontakt stehenden Teilen des Umlenkrads.

Mittels einer solchen Vorrichtung kann also eine Förderkette derart ausschließlich mittels des Umlenkrads geführt und umgelenkt werden, dass die Förderkette durch das Gehäuse hindurch verlaufen kann, ohne in Kontakt mit der Bodenplatte zu stehen. Eine Reibung aufgrund einer Relativbewegung zwischen Förderkette und Bodenplatte kann somit vermieden werden. Daher kann auch auf besonders vorteilhafte Weise ein Verschleiß der Bodenplatte und/oder der Förderkette aufgrund einer Reibung zwischen Bodenplatte und Förderkette vermieden werden. Aufgrund des verringerten Verschleißes kann somit die Lebensdauer der Vorrichtung deutlich erhöht werden.

Ein weiterer Vorteil besteht darin, dass keine Kettenführungsschiene an der Innenoberfläche des Gehäusekörpers benötigt wird. Aufgrund der Möglichkeit der Führung und Umlenkung der Förderkette ausschließlich mittels des Umlenkrads kann auf die Verwendung einer in dem Gehäuse angeordneten und/oder mit dem Gehäuse verbundenen Kettenführungsschiene verzichtet werden. Eine Reibung aufgrund einer Relativbewegung zwischen Förderkette und Kettenführungsschiene, wie sie bei bekannten Vorrichtungen auftritt, kann somit vermieden werden. Daher kann auf besonders vorteilhafte Weise ein Verschleiß der Kettenführungsschiene und/oder der Förderkette aufgrund einer Reibung zwischen Kettenführungsschiene und Förderkette vermieden werden. Aufgrund des verringerten Verschleißes kann die Lebensdauer der Vorrichtung deutlich erhöht werden. Da keine Kettenführungsschiene notwendig ist, können außerdem die Herstellungskosten für die Vorrichtung reduziert werden.

Ein weiterer Vorteil besteht darin, dass aufgrund der Vermeidung von Reibung zwischen Förderkette und Bodenplatte sowie der Vermeidung von Reibung zwischen Förderkette und Kettenführungsschiene das Gehäuse und/oder die Bodenplatte nicht aus einem verschleißfesten Material bestehen müssen. So kann beispielsweise das Gehäuse aus Kunststoff bestehen, wodurch die Materialkosten der Vorrichtung deutlich reduziert werden können.

Gemäß einer besonders bevorzugten Ausführungsform ist vorgesehen, dass die erste Gehäuseöffnung und die zweite Gehäuseöffnung bezogen auf die Rotationsachse gedreht zueinander angeordnet sind, vorzugsweise bezogen auf die Rotationsachse um mindestens 75° und höchstens 150°, insbesondere um 90° oder 135°, gedreht zueinander angeordnet sind.

Die erste Gehäuseöffnung und die zweite Gehäuseöffnung sind vorzugsweise in unterschiedliche Richtungen orientiert, und bevorzugt bezogen auf eine vertikale Achse um mindestens 80° und höchstens 145°, insbesondere um 90° oder 135°, gedreht zueinander ausgerichtet. Dadurch kann die Förderkette in einer ersten Richtung in das Gehäuse hineingeführt und in einer zweiten, abweichenden Richtung, insbesondere einer um 90° oder 135° verschiedenen Richtung, aus dem Gehäuse hinausgeführt werden.

Erfindungsgemäß sind das erste Förderkettenführungselement und das zweite Förderkettenführungselement in Richtung der Rotationsachse beabstandet zueinander angeordnet, wobei der Abstand in vertikaler Richtung zwischen der unteren Seite des ersten Förderkettenführungselements und der oberen Seite des zweiten Förderkettenführungselements vorzugsweise mindestens 22 mm, besonders bevorzugt mindestens 18 mm, insbesondere 14,3 mm, beträgt.

Mittels eines solchen Abstandes kann eine verbesserte Führung der Förderkette entlang des Umlenkrads erreicht werden. Ferner kann es, in Abhängigkeit von dem Abstand und den Abmessungen der Förderkette, mittels eines solchen Abstands ermöglicht werden, die Förderkette aufgrund eines solchen Abstandes leicht schräggestellt zwischen dem ersten Förderkettenführungselement und dem zweiten Förderkettenführungselement anzuordnen.

Es ist besonders bevorzugt, dass das erste Förderkettenführungselement sich ausgehend von dem Außenumfang des Umlenkrads parallel zu einer radialen Richtung, die orthogonal zur Rotationsachse ausgerichtet ist, nach radial außen erstreckt. Vorzugsweise erstreckt sich das erste Förderkettenführungselement im Wesentlichen in horizontaler Richtung nach radial außen.

Es ist besonders bevorzugt, dass das zweite Förderkettenführungselement sich ausgehend von dem Außenumfang des Umlenkrads parallel zu einer radialen Richtung, die orthogonal zur Rotationsachse ausgerichtet ist, nach radial außen erstreckt. Vorzugsweise erstreckt sich das zweite Förderkettenführungselement im Wesentlichen in horizontaler Richtung nach radial außen.

Vorzugsweise erstrecken sich das erste und das zweite Förderkettenführungselement parallel zueinander nach radial außen, insbesondere in horizontaler Richtung nach radial außen.

Es ist besonders bevorzugt, dass der erste Förderkettenführungsabschnitt auf einer Unterseite des ersten Förderkettenführungselements angeordnet ist. Dadurch kann auf besonders vorteilhafte Weise erreicht werden, dass eine Förderkette von oben mittels des ersten Förderkettenführungsabschnitts geführt wird, und der erste Förderkettenführungsabschnitt dabei oberhalb der Förderkette angeordnet ist.

Es ist besonders bevorzugt, dass der zweite Förderkettenführungsabschnitt auf einer Oberseite des zweiten Förderkettenführungselements angeordnet ist. Dadurch kann auf besonders vorteilhafte Weise erreicht werden, dass eine Förderkette von unten mittels des zweiten Förderkettenführungsabschnitts geführt wird, und der zweite Förderkettenführungsabschnitt dabei unterhalb der Förderkette angeordnet ist.

Vorzugsweise sind der erste Förderkettenführungsabschnitt und der zweite Förderkettenführungsabschnitt in vertikaler Richtung mindestens 22 mm, vorzugsweise mindestens 18 mm, insbesondere 14,3 mm, voneinander beabstandet angeordnet.

Es ist besonders bevorzugt, dass der erste Förderkettenführungsabschnitt und der zweite Förderkettenführungsabschnitt einander zugewandt angeordnet sind.

Es ist besonders bevorzugt, dass sich das erste Förderkettenführungselement weiter nach radial außen erstreckt als das zweite Förderkettenführungselement. Mittels einer solchen Anordnung können das erste Förderkettenführungselement und das zweite Förderkettenführungselement optimal auf die Führung einer Förderkette angepasst angeordnet werden. So kann das erste Förderkettenführungselement einen radial weiter außenliegenden Abschnitt einer Förderkette führen und das zweite Förderkettenführungselement einen radial weiter innenliegenden Abschnitt der Förderkette führen.

Erfindungsgemäß ist die Erstreckung des ersten Förderkettenführungselements in Richtung nach radial außen um ein Vielfaches größer, nämlich mindestens viermal so groß, vorzugsweise mindestens achtmal so groß, insbesondere mindestens zwölfmal so groß, als die Erstreckung des zweiten Förderkettenführungselements in Richtung nach radial außen.

Es ist besonders bevorzugt, dass die Erstreckung des ersten Förderkettenführungselements in Richtung nach radial außen mindestens 34 mm und/oder höchstens 50 mm beträft.

Es ist besonders bevorzugt, dass die Erstreckung des zweiten Förderkettenführungselements in Richtung nach radial außen mindestens 3 mm und/oder höchstens 8 mm beträgt.

Wenn sich das erste Förderkettenführungselement derart deutlich weiter nach radial außen erstreckt als das zweite Förderkettenführungselement, kann auf besonders vorteilhafte Weise eine Förderkette so zwischen dem ersten und dem zweiten Förderkettenführungselement angeordnet werden, dass die Förderkette mittels des ersten und des zweiten Förderkettenführungselements geführt wird und gleichzeitig unterhalb der Förderkette ein freier Raum angeordnet ist, entlang dessen sich kein Förderkettenführungselement erstreckt, sodass die Förderkette das Tierfuttermittel ohne eine Behinderung durch das zweite Förderkettenführungselement durch das Gehäuse transportieren kann.

Ferner sind vorzugsweise bei einer solchen Ausgestaltung das erste und das zweite Förderkettenführungselement nur derart nach radial außen erstreckt ausgebildet, dass das erste und das zweite Förderkettenelement jeweils ihre Führungsfunktion ausführen können.

Es ist besonders bevorzugt, dass der erste Förderkettenführungsabschnitt und der zweite Förderkettenführungsabschnitt ausgebildet und angeordnet sind, um eine Förderkette zwischen dem ersten Förderkettenführungsabschnitt und dem zweiten Förderkettenführungsabschnitt aufzunehmen.

Es ist besonders bevorzugt, dass keine Kettenführungsschiene an der Innenoberfläche des Gehäusekörpers angeordnet ist. Dadurch kann auf besonders vorteilhafte Weise eine Reibung aufgrund einer Relativbewegung zwischen Förderkette und Kettenführungsschiene, wie sie bei bekannten Vorrichtungen auftritt, vermieden werden.

Es ist besonders bevorzugt, dass das Gehäuse einen Gehäusekörper aufweist, wobei vorzugsweise der Gehäusekörper Kunststoff, insbesondere thermoplastischen Kunststoff, umfasst oder daraus besteht, wobei der Gehäusekörper vorzugsweise als ein Kunststoff-Spritzgussbauteil ausgebildet ist.

Eine solche Ausführung des Gehäusekörpers als Kunststoffgehäuse ist gerade in Kombination mit der Führung einer Förderkette ausschließlich mittels des Umlenkrads besonders vorteilhaft. Denn zwischen Förderkette und Gehäuse findet vorzugsweise kein Kontakt und daher auch keine Reibung statt. Daher wird es erst ermöglicht ein, verglichen mit Stahl deutlich weniger verschleißfestes, Material wie Kunststoff für den Gehäusekörper zu verwenden. Durch die Verwendung von Kunststoff für den Gehäusekörper können die Materialkosten für den Gehäusekörper deutlich reduziert werden. Außerdem kann das Gewicht der Vorrichtung dadurch deutlich reduziert werden, wodurch der Transport und die Handhabung vereinfacht werden.

Vorzugsweise weist das Gehäuse eine mit dem Gehäusekörper, vorzugsweise lösbar, verbundene Bodenplatte auf, die vorzugsweise Stahl umfasst oder daraus besteht.

Der Gehäusekörper und die Bodenplatten können vorzugsweise aus unterschiedlichem Material bestehen. Es kann allerdings auch das gleiche Material für den Gehäusekörper und die Bodenplatte gewählt werden. Die Bodenplatte ist vorzugsweise mit dem Gehäusekörper lösbar verbunden, insbesondere mittels einer Schraubverbindung.

Es ist besonders bevorzugt, dass die Bodenplatte Stahl mit einer Härte Brinell Wolframkarbid nach EN ISO 6506-1 von weniger als 400 HBW (Härte Brinell Wolframkarbid), vorzugsweise weniger als 300 HBW, besonders bevorzugt weniger als 200 HBW, umfasst oder daraus besteht.

Eine solche Ausführung der Bodenplatte als Stahlbauteil mit einer Härte, die verglichen mit üblicherweise für solche Bodenplatten verwendetem Stahl relativ gering ist, ist gerade in Kombination mit der Führung einer Förderkette ausschließlich mittels des Umlenkrads besonders vorteilhaft. Denn zwischen Förderkette und Bodenplatte findet vorzugsweise kein Kontakt und daher auch keine Reibung statt. Daher wird es erst ermöglicht einen Stahl mit einer relativ geringen Härte zu verwenden, ohne dass die Bodenplatte dabei relativ schnell verschleißt. Durch die Verwendung eines solchen Stahls für die Bodenplatte können die Materialkosten für die Bodenplatte deutlich reduziert werden.

Es ist besonders bevorzugt, dass das Gehäuse im Bereich der ersten Gehäuseöffnung mindestens ein, insbesondere integral mit dem Gehäusekörper ausgebildetes, Futtertrogführungselement zur Führung eines Futtertroges aufweist, wobei das Gehäuse im Bereich der ersten Gehäuseöffnung vorzugsweise zwei, insbesondere integral mit dem Gehäusekörper ausgebildete Futtertrogführungselemente zur Führung eines Futtertroges aufweist. Das mindestens eine Futtertrogführungselement erstreckt sich vorzugsweise in einer Richtung, in der ein Futtertrog im Bereich der Gehäuseöffnung einschiebbar ist.

Es ist besonders bevorzugt, dass das Gehäuse im Bereich der zweiten Gehäuseöffnung mindestens ein, vorzugsweise integral mit dem Gehäusekörper ausgebildetes, Futtertrogführungselement zur Führung eines Futtertroges aufweist, wobei das Gehäuse im Bereich der zweiten Gehäuseöffnung vorzugsweise zwei, insbesondere integral mit dem Gehäusekörper ausgebildete Futtertrogführungselemente zur Führung eines Futtertroges aufweist. Das mindestens eine Futtertrogführungselement erstreckt sich vorzugsweise in einer Richtung, in der ein Futtertrog im Bereich der Gehäuseöffnung einschiebbar ist.

Ein Vorteil eines solchen mindestens einen Futtertrogführungselements besteht darin, dass dieses integral mit dem Gehäusekörper ausgebildet sein kann. Dies ist insbesondere dann auf einfache Weise realisierbar, wenn der Gehäusekörper Kunststoff umfasst oder daraus besteht. Durch solche integral ausgebildete Futtertrogführungselement ist es nicht notwendig, ein zusätzliches Bauteil für die Führung der Futtertröge am Gehäuse zu befestigen.

Ein weiterer Vorteil solcher Futtertrogführungselemente besteht darin, dass sich die Futtertröge nicht oder nur wenig verformen können, da die Futtertröge in den Gehäusekörper eingeschoben werden können und dann derart passend in dem Gehäusekörper sitzen, dass eine Verformung durch die Futtertrogführungselemente verhindert wird.

Es ist besonders bevorzugt, dass das im Bereich der ersten Gehäuseöffnung angeordnete mindestens eine Futtertrogführungselement als mindestens ein in die erste Gehäuseöffnung hineinragender Vorsprung, vorzugsweise mit einem L-förmigen Querschnitt, ausgebildet ist. Der Vorsprung kann insbesondere einen Querschnitt in Form eines Winkelprofils, beispielsweise ein gleichschenkliges Winkelprofil mit zwei 90° zueinander angeordneten Abschnitten ausgebildet sein.

Es ist besonders bevorzugt, dass das im Bereich der zweiten Gehäuseöffnung angeordnete mindestens eine Futtertrogführungselement als mindestens ein in die zweite Gehäuseöffnung hineinragender Vorsprung, vorzugsweise mit einem L-förmigen Querschnitt, ausgebildet ist. Der Vorsprung kann insbesondere einen Querschnitt in Form eines Winkelprofils, beispielsweise ein gleichschenkliges Winkelprofil mit zwei 90° zueinander angeordneten Abschnitten ausgebildet sein.

Es ist besonders bevorzugt, dass die Vorrichtung eine Vorrichtungshalteanordnung umfasst, die umfasst: mindestens einen, vorzugsweise zwei, Ständer, und vorzugsweise ein mit dem mindestens einen Ständer verbundenes Fußelement, und mindestens einen, vorzugsweise zwei, Drahtbügel, der mit dem Gehäuse verbunden ist und ausgebildet ist, um die Vorrichtung an dem mindestens einen Ständer der Vorrichtungshalteanordnung zu fixieren.

Mittels einer solchen Vorrichtungshalteanordnung kann die Vorrichtung auf besonders einfache Weise in der Höhe, also in vertikaler Richtung, verstellt werden.

Gemäß einem weiteren Aspekt wird die eingangs genannte Aufgabe gelöst durch ein Tierfuttermitteltransportsystem zum Transport von Tierfuttermittel, umfassend mindestens eine wie hier beschriebene Vorrichtung, vorzugsweise mehrere, insbesondere vier, wie hier beschriebene Vorrichtungen, eine Förderkette, vorzugsweise umfassend eine Vielzahl von miteinander verbundenen Kettengliedern, wobei sich die Förderkette durch die mindestens eine Vorrichtung hindurch erstreckt.

Vorzugsweise ist die Förderkette zumindest abschnittsweise zwischen dem ersten Förderkettenelement und dem zweiten Förderkettenelement, und insbesondere zwischen dem ersten Förderkettenführungsabschnitt und dem zweiten Förderkettenführungsabschnitt, angeordnet.

Es ist besonders bevorzugt, dass das Tierfuttermitteltransportsystem mindestens einen Futtertrog, vorzugsweise ausgebildet in Form eines U-Profils, der vorzugsweise mit der mindestens einen Vorrichtung verbunden ist, umfasst.

Vorzugsweise wird sowohl im Bereich der ersten Gehäuseöffnung als auch im Bereich der zweiten Gehäuseöffnung jeweils ein Futtertrog angeordnet und mit dem Gehäuse der Vorrichtung verbunden.

Vorzugsweise wird innerhalb des Futtertrogs ein Fressgrill angeordnet. Dadurch kann eine getrennte Fütterung von Hennen und Hähnen ermöglicht werden.

Es ist besonders bevorzugt, dass das Tierfuttermitteltransportsystem umfasst: eine Antriebseinheit, vorzugsweise eine elektrische Antriebseinheit, zum Antreiben der Förderkette, wobei die Antriebseinheit vorzugsweise ausgebildet ist, um die Förderkette mit einer Geschwindigkeit von mindestens 10 m/min, vorzugsweise mindestens 12 m/min, und mit einer Geschwindigkeit von höchstens 40 m/min, vorzugsweise höchstens 38 m/min zu bewegen. Vorzugsweise ist die Antriebseinheit ausgebildet, um die Förderkette mit einer Geschwindigkeit im Bereich von 12 m/min bis 18 m/min oder mit einer Geschwindigkeit von 36 m/min zu bewegen.

Die Antriebseinheit ist vorzugsweise mit der Förderkette zum Antreiben der Förderkette gekoppelt. Die Antriebseinheit weist vorzugsweise ein Zahnrad auf, wobei mittels des von der Antriebseinheit angetriebenen Zahnrads die Förderkette antreibbar ist. Die Antriebseinheit kann insbesondere als elektrisch angetriebener Getriebemotor ausgebildet sein.

Es ist besonders bevorzugt, dass das Tierfuttermitteltransportsystem umfasst: mindestens eine Kettenspanneinrichtung, vorzugsweise mehrere, insbesondere zwei, Kettenspanneinrichtungen, zum Spannen der Förderkette.

Die Förderkette kann mittels der Kettenspanneinrichtung gespannt werden, damit die Förderkette in einem Tierfuttermitteltransportsystem umlaufen kann. Die Kettenspanneinrichtung ist insbesondere ausgebildet, um zwei mit der Kettenspanneinrichtung verbundene Futtertröge voneinander wegzubewegen, also auseinanderzudrücken, sodass sich der Abstand der Futtertröge voneinander und damit der Abstand der Vorrichtungen voneinander vergrößert, wodurch die Förderkette gespannt wird. So kann mittels der Kettenspanneinrichtung eine Vorspannung auf die Förderkette aufgebracht werden.

Vorzugsweise weist das Tierfuttermitteltransportsystem zwei Kettenspanneinrichtungen auf, die an parallel zueinander angeordneten Futtertrögen angeordnet sind.

Es ist besonders bevorzugt, dass das Tierfuttermitteltransportsystem umfasst: einen Futterbehälter, wobei sich die Förderkette zur Aufnahme von Tierfutter aus dem Futterbehälter durch den Futterbehälter hindurch erstreckt.

Ein solcher Futterbehälter dient somit der Zufuhr von Tierfuttermittel. Der Futterbehälter weist vorzugsweise zwei Öffnungen auf, in die ein Futtertrog hinein- bzw. herausgeführt werden kann. Die Förderkette läuft dann vorzugsweise durch den mit Tierfuttermittel gefüllten Futterbehälter und transportiert das Tierfuttermittel zu Tieren.

Es ist besonders bevorzugt, dass der mindestens eine Futtertrog unmittelbar mit dem Gehäuse, vorzugsweise lösbar, verbunden ist.

Vorzugsweise ist der mindestens eine Futtertrog in das Gehäuse in einem Bereich der ersten Gehäuseöffnung und/oder der zweiten Gehäuseöffnung einschiebbar.

Gemäß einem weiteren Aspekt wird die eingangs genannte Aufgabe gelöst durch ein Verfahren zur Umlenkung einer Förderkette, insbesondere zum Transport von Tierfuttermittel, das Verfahren umfassend die Schritte: Bereitstellen einer Vorrichtung zur Umlenkung einer Förderkette, vorzugsweise einer wie hier beschriebenen Vorrichtung, die Vorrichtung umfassend ein Gehäuse mit einer ersten Gehäuseöffnung und einer zweiten Gehäuseöffnung, und ein Umlenkrad, wobei das Umlenkrad innerhalb des Gehäuses zwischen der ersten Gehäuseöffnung und der zweiten Gehäuseöffnung angeordnet ist, und wobei das Umlenkrad drehbar um eine, vorzugsweise vertikale, Rotationsachse gelagert ist, wobei das Umlenkrad ein erstes Förderkettenführungselement aufweist, das sich ausgehend von einem Außenumfang des Umlenkrads nach radial außen erstreckt, wobei das erste Förderkettenführungselement einen ersten Förderkettenführungsabschnitt aufweist, und wobei das Umlenkrad ein zweites Förderkettenführungselement aufweist, das sich ausgehend von dem Außenumfang des Umlenkrads nach radial außen erstreckt, wobei das zweite Förderkettenführungselement einen zweiten Förderkettenführungsabschnitt aufweist, wobei das erste Förderkettenführungselement (31) und das zweite Förderkettenführungselement (32) in Richtung der Rotationsachse (100) beabstandet zueinander angeordnet sind, wobei die Erstreckung (L1) des ersten Förderkettenführungselements (31) in Richtung nach radial außen um ein Vielfaches größer, nämlich mindestens viermal so groß, ist als die Erstreckung (L2) des zweiten Förderkettenführungselements (32) in Richtung nach radial außen, Anordnen einer Förderkette, vorzugsweise umfassend eine Vielzahl von miteinander verbundenen Kettengliedern, sodass die Förderkette sich von der ersten Gehäuseöffnung zur zweiten Gehäuseöffnung erstreckt wobei die Förderkette entlang des Umlenkrads zumindest abschnittsweise zwischen dem ersten Förderkettenelement und dem zweiten Förderkettenelement, und insbesondere zwischen dem ersten Förderkettenführungsabschnitt und dem zweiten Förderkettenführungsabschnitt, angeordnet ist.

Vorzugsweise umfasst das Verfahren ein Bewegen der Förderkette mittels einer Antriebseinheit mit einer Geschwindigkeit von mindestens 10 m/min, vorzugsweise mindestens 12 m/min, und von höchstens 40 m/min, vorzugsweise höchstens 38 m/min. Vorzugsweise wird die Förderkette mit einer Geschwindigkeit im Bereich von 12 m/min bis 18 m/min oder mit einer Geschwindigkeit von 36 m/min bewegt.

Vorzugsweise umfasst das Verfahren ferner ein Anhalten der Förderkette mittels Anhalten der Antriebseinheit. Vorzugsweise erfolgt fortlaufend abwechselnd ein Bewegen der Förderkette und ein Anhalten der Förderkette.

Vorzugsweise erfolgt ein Bewegen höchstens 75 Minuten pro Tag, vorzugsweise höchstens 20 Minuten pro Tag, besonders bevorzugt höchstens 15 Minuten pro Tag, und ein Anhalten der Förderkette die restliche Zeit pro Tag.

Es ist besonders bevorzugt, dass die Förderkette beim Bewegen der Förderkette durch die Vorrichtung hindurch innerhalb der Vorrichtung nur mit dem Umlenkrad direkt in Kontakt steht und nicht direkt in Kontakt zu anderen Teilen der Vorrichtung steht.

Vorzugsweise berührt demnach die Förderkette im Betrieb das Umlenkrad, aber nicht das Gehäuse und nicht den Gehäusekörper des Gehäuses und auch nicht die Bodenplatte des Gehäuses.

Gemäß einem weiteren Aspekt wird die eingangs genannte Aufgabe gelöst durch eine Verwendung einer wie hier beschriebenen Vorrichtung und/oder eines wie hier beschriebenen Tierfuttermitteltransportsystems in einem Stall für Zuchttiere, insbesondere in einem Geflügelstall, zum Transport von Tiernahrung in dem Stall.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine perspektivische Ansicht von schräg oben einer Vorrichtung zur Umlenkung einer Förderkette;
- Fig. 2:: eine Ansicht von oben einer Vorrichtung zur Umlenkung einer Förderkette;
- Fig. 3:: eine perspektivische Ansicht von schräg unten einer Vorrichtung zur Umlenkung einer Förderkette;
- Fig. 4:: eine Ansicht von unten einer Vorrichtung zur Umlenkung einer Förderkette;
- Fig. 5:: eine perspektivische Ansicht von schräg oben einer Vorrichtung zur Umlenkung einer Förderkette;
- Fig. 6:: eine Seitenansicht einer Vorrichtung zum Umlenken einer Förderkette;
- Fig. 7:: eine Detailansicht aus der in Fig. 6 gezeigten Ansicht;
- Fig. 8:: eine Schnittansicht einer Vorrichtung zum Umlenken einer Förderkette;
- Fig. 9:: eine Detailansicht aus der in Fig. 8 gezeigten Ansicht;
- Fig. 10:: eine stark schematische Schnittansicht einer Vorrichtung zum Umlenken einer Förderkette;
- Fig. 11:: eine perspektivische Ansicht eines Tierfuttermitteltransportsystems;
- Fig. 12:: eine schematische Darstellung eines Verfahrens zur Umlenkung einer Förderkette.

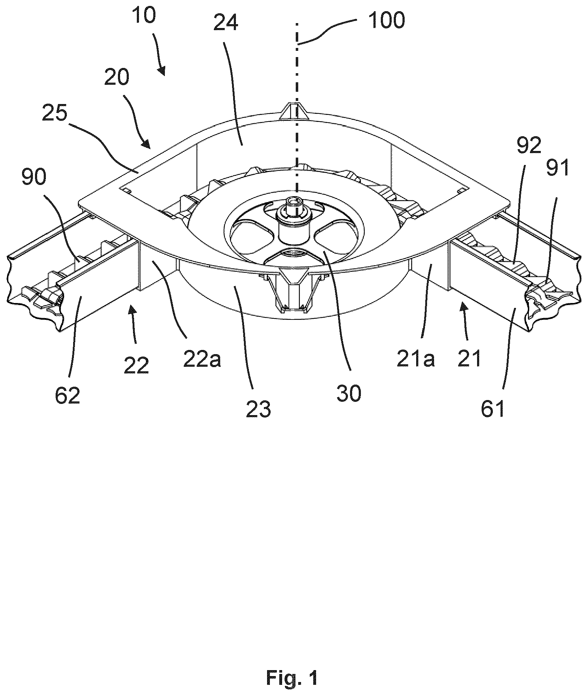

Fig. 1 zeigt eine perspektivische Ansicht von schräg oben einer Vorrichtung 10 zur Umlenkung einer Förderkette. In der hier gezeigten Darstellung ist die Vorrichtung 10 ohne Deckel gezeigt, sodass das Innere der Vorrichtung 10 sichtbar ist.

Die Vorrichtung 10 dient der Umlenkung einer Förderkette 90 um 90°. Die Förderkette 90 dient dem Transport von Tierfuttermittel. Die Vorrichtung 10 umfasst ein Gehäuse 20 mit einer ersten Gehäuseöffnung 21 und einer zweiten Gehäuseöffnung 22. Die erste Gehäuseöffnung 21 ist durch einen ersten Gehäuseöffnungsabschnitt 21a gebildet. Die zweite Gehäuseöffnung 22 ist durch einen zweiten Gehäuseöffnungsabschnitt 22a gebildet. Im Bereich der ersten Gehäuseöffnung 21a ist ein erster Futtertrog 61 angeordnet und in den Gehäusekörper 25 eingeschoben. Im Bereich der zweiten Gehäuseöffnung 22a ist ein zweiter Futtertrog 62 angeordnet und in den Gehäusekörper 25 eingeschoben.

Die Vorrichtung 10 umfasst ein Umlenkrad 30 zum Führen und Umlenken der Förderkette 90 von der ersten Gehäuseöffnung 21 des Gehäuses 20 zu der zweiten Gehäuseöffnung 22 des Gehäuses 20. Das Umlenkrad 30 ist innerhalb des Gehäuses 20 zwischen der ersten Gehäuseöffnung 21 und der zweiten Gehäuseöffnung 22 angeordnet. Das Umlenkrad 30 ist dabei drehbar um eine vertikal ausgerichtete Rotationsachse 100 gelagert.

Das Gehäuse 20 weist einen Gehäusekörper 25 auf, der aus einem thermoplastischen Kunststoff besteht und in einem Kunststoff-Spritzgussverfahren hergestellt worden ist. Der Gehäusekörper 25 weist eine Innenoberfläche 24 auf, an der keine Kettenführungsschiene angeordnet ist. Der Gehäusekörper 25 weist eine Auswölbung 23 auf, zur Aufnahme des Umlenkrads 30 in dem Gehäuse 20 an dieser Position.

Die Förderkette 90 wird mittels des Umlenkrads 30 derart geführt und umgelenkt, dass die Förderkette innerhalb des Gehäuses 20 nur mit dem Umlenkrad 30 in Kontakt steht und keine Reibung zwischen der Förderkette 90 und dem Gehäuse 20 erfolgt. Die Förderkette 90 weist eine Vielzahl von miteinander verbundenen Kettengliedern 91, 92 auf.

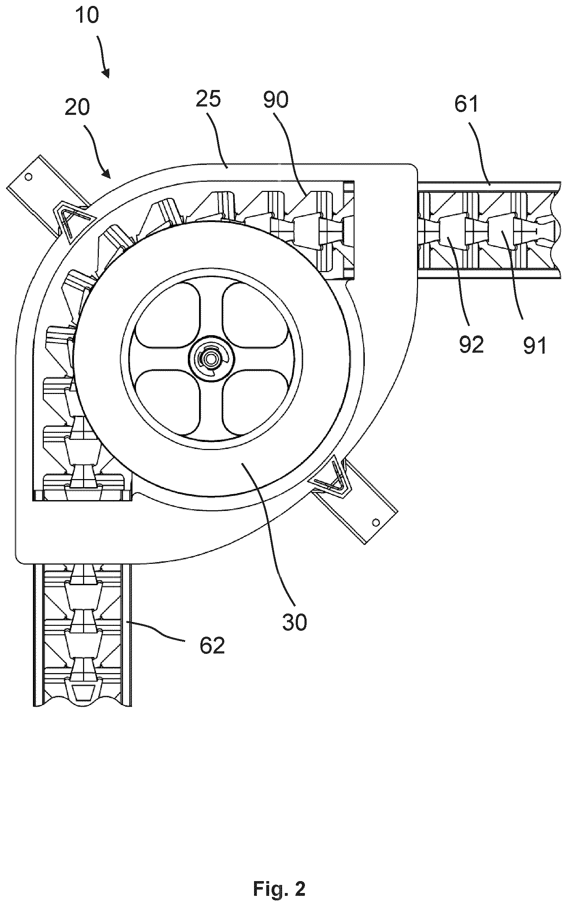

Fig. 2 zeigt eine Ansicht von oben der in Fig. 1 gezeigten Vorrichtung 10 zur Umlenkung einer Förderkette 90. In der hier gezeigten Darstellung ist die Vorrichtung 10 ebenfalls ohne Deckel gezeigt, sodass das Innere der Vorrichtung 10 sichtbar ist.

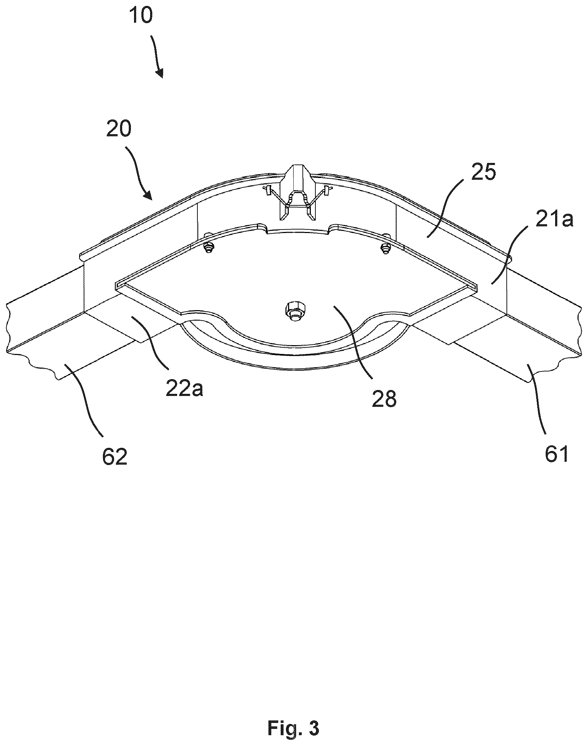

Fig. 3 zeigt eine perspektivische Ansicht von schräg unten der in Fig. 1 gezeigten Vorrichtung 10 zur Umlenkung einer Förderkette. Am unteren Abschnitt des Gehäuses 20 ist eine Bodenplatte 28 angeordnet, die mit dem Gehäusekörper 25 mittels einer Schraubverbindung lösbar verbunden ist.

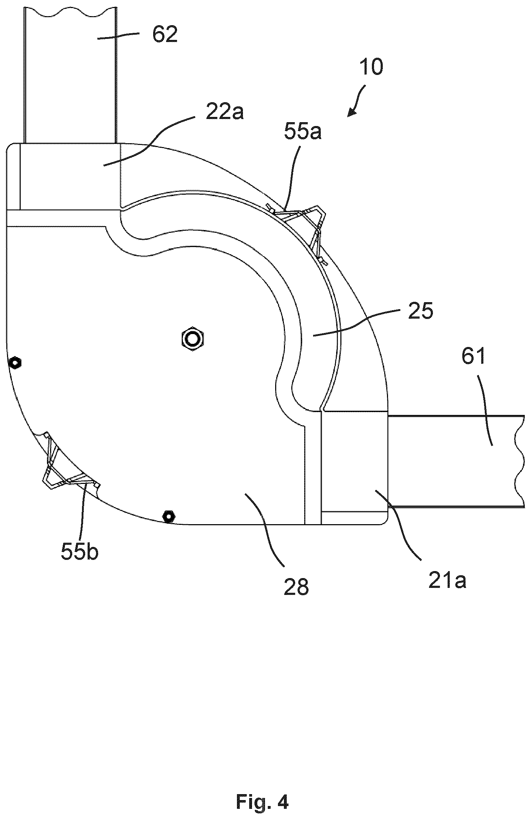

Fig. 4 zeigt eine Ansicht von unten der in Fig. 1 gezeigten Vorrichtung 10 zur Umlenkung einer Förderkette. In dieser Ansicht ist zu erkennen, dass die Vorrichtung 10 zwei Drahtbügel 55a, 55b, die mit dem Gehäuse 20 verbunden und/oder verbindbar sind aufweist. Diese Drahtbügel 55a, 55b sind vorgesehen, um das Gehäuse 20 an einer Vorrichtungshalteanordnung zu fixieren.

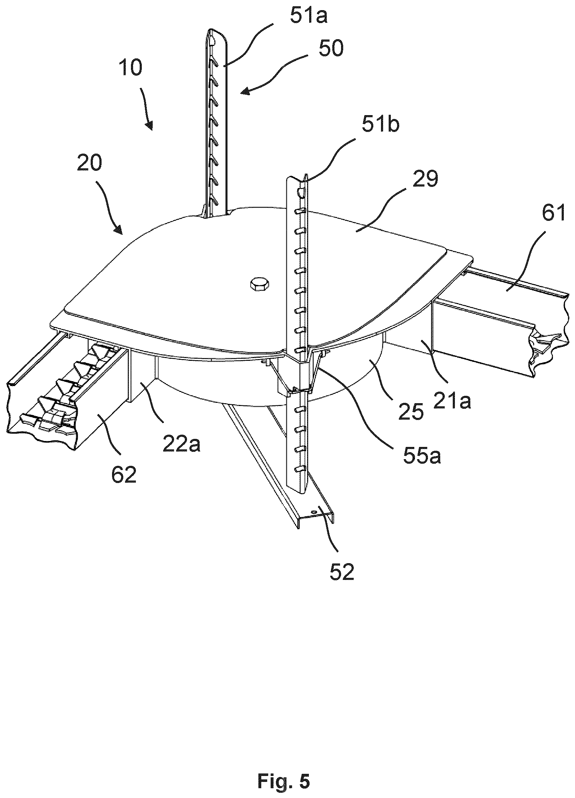

Fig. 5 zeigt eine perspektivische Ansicht von schräg oben der in Fig. 1 gezeigten Vorrichtung 10 zur Umlenkung einer Förderkette 90. In dieser Ansicht ist jedoch im Unterschied zur der in Fig. 1 gezeigten Ansicht ein Deckel 29, der mit dem Gehäusekörper 25 lösbar verbunden ist, dargestellt. Ferner ist in Fig. 5 eine Vorrichtungshalteanordnung 50 gezeigt, die zwei Ständer 51a, 51b und ein mit den Ständern 51a, 51b verbundenes Fußelement 52 aufweist. Das Gehäuse 20 ist mittels der zwei Drahtbügel 55a, 55b, mit der Vorrichtungshalteanordnung 50 verbunden.

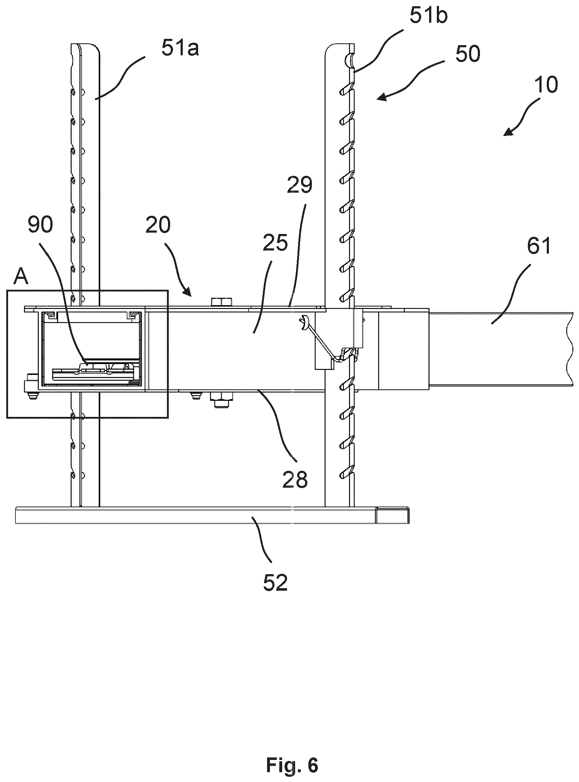

Fig. 6 zeigt eine Seitenansicht der in Fig. 5 gezeigten Vorrichtung 10 zum Umlenken einer Förderkette 90.

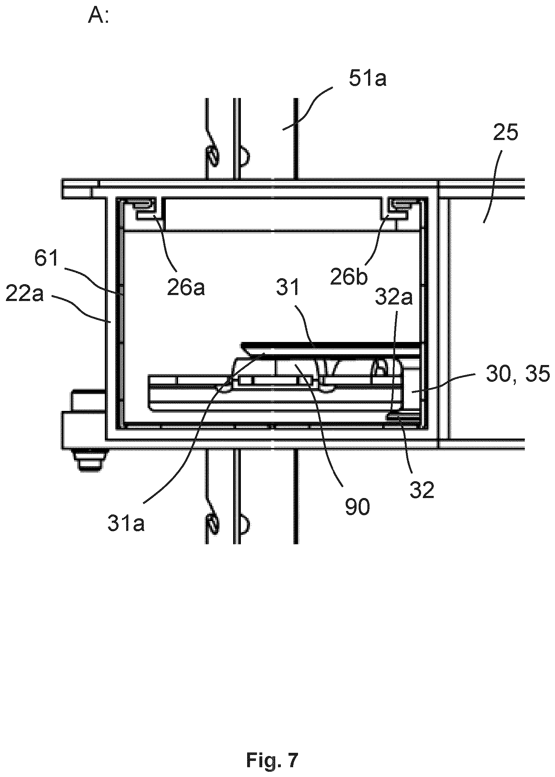

Fig. 7 zeigt eine Detailansicht A aus der in Fig. 6 gezeigten Ansicht. Von dem Umlenkrad 30 ist in dieser Ansicht der radial äußere Abschnitt zu erkennen. Das Umlenkrad 30 weist ein erstes Förderkettenführungselement 31 auf, das sich ausgehend von einem Außenumfang 35 des Umlenkrads 30 nach radial außen erstreckt. Das erste Förderkettenführungselement 31 weist einen ersten Förderkettenführungsabschnitt 31a auf.

Das Umlenkrad 30 weist außerdem ein zweites Förderkettenführungselement 32 auf, das sich ausgehend von dem Außenumfang 35 des Umlenkrads 30 ebenfalls nach radial außen erstreckt. Das zweite Förderkettenführungselement 32 weist einen zweiten Förderkettenführungsabschnitt 32a auf.

Die Förderkette 90 ist derart zwischen dem ersten Förderkettenführungselement 31 und dem zweiten Förderkettenführungselement 32 angeordnet, dass die Förderkette 90 innerhalb des Gehäuses nur von dem Umlenkrad 30 geführt und umgelenkt wird und nicht in Kontakt mit anderen Bauteilen des Gehäuses steht.

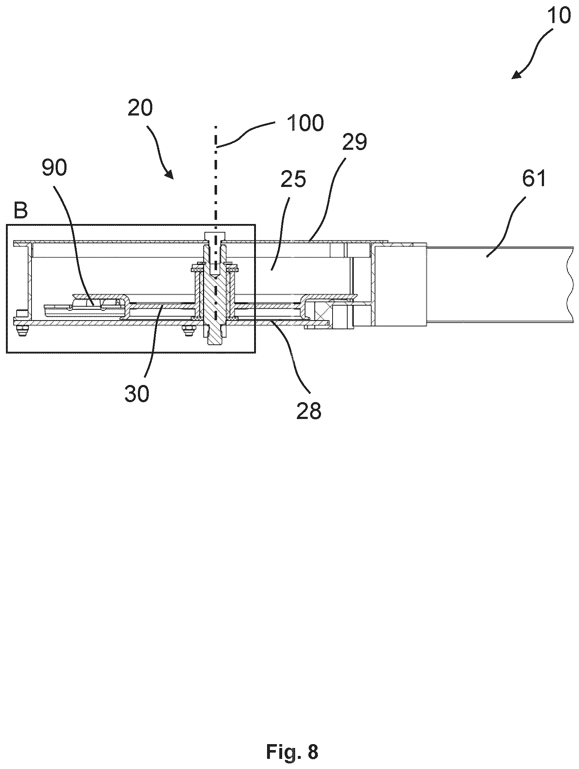

Fig. 8 zeigt eine Schnittansicht einer Vorrichtung 10 zum Umlenken einer Förderkette 90. Die Vorrichtung 10 weist ein Gehäuse 20 mit einem Gehäusekörper 25 sowie einem Deckel 29 und einer Bodenplatte 28 auf. Ein Umlenkrad 30 ist drehbar um eine Rotationsachse 100 innerhalb des Gehäuses 20 angeordnet. Das Umlenkrad 30 ist rotationssymmetrisch ausgebildet.

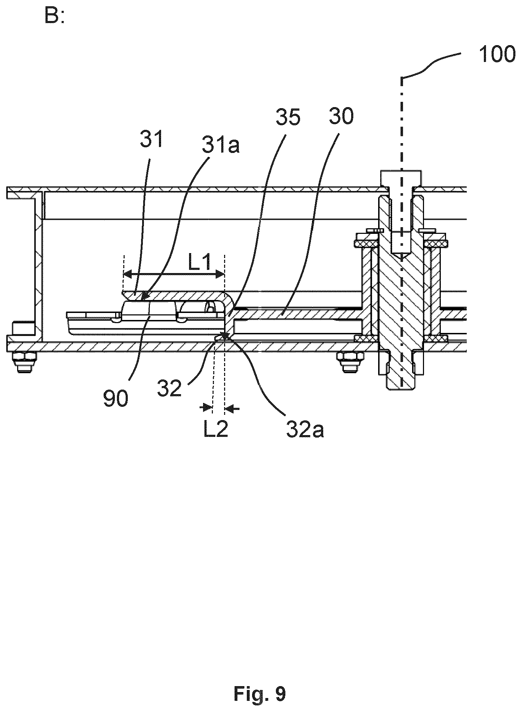

Fig. 9 zeigt eine Detailansicht B aus der in Fig. 8 gezeigten Ansicht. Das Umlenkrad 30 weist ein erstes Förderkettenführungselement 31 auf, das sich ausgehend von einem Außenumfang 35 des Umlenkrads 30 nach radial außen erstreckt. Das erste Förderkettenführungselement 31 weist einen ersten Förderkettenführungsabschnitt 31a auf, der auf der Unterseite des ersten Förderkettenführungselements 31 angeordnet ist.

Das Umlenkrad 30 weist außerdem ein zweites Förderkettenführungselement 32 auf, das sich ausgehend von dem Außenumfang 35 des Umlenkrads 30 ebenfalls nach radial außen erstreckt. Das zweite Förderkettenführungselement 32 weist einen zweiten Förderkettenführungsabschnitt 32a auf, der auf der Oberseite des zweiten Förderkettenführungselements 32 angeordnet ist.

Die Erstreckung L1 des ersten Förderkettenführungselements 31 in Richtung nach radial außen ist um ein Vielfaches größer, in dem hier gezeigten Ausführungsbeispiel mehr als viermal größer, als die Erstreckung L2 des zweiten Förderkettenführungselements 32 in Richtung nach radial außen.

Die Förderkette 90 ist dabei derart zwischen dem ersten Förderkettenführungselement 31 und dem zweiten Förderkettenführungselement 32, insbesondere zwischen dem ersten Förderkettenführungsabschnitt 31a und dem zweiten Förderkettenführungsabschnitt 32a, angeordnet, dass die Förderkette 90 innerhalb des Gehäuses nur von dem Umlenkrad 30 geführt und umgelenkt wird und nicht in Kontakt mit anderen Bauteilen des Gehäuses steht.

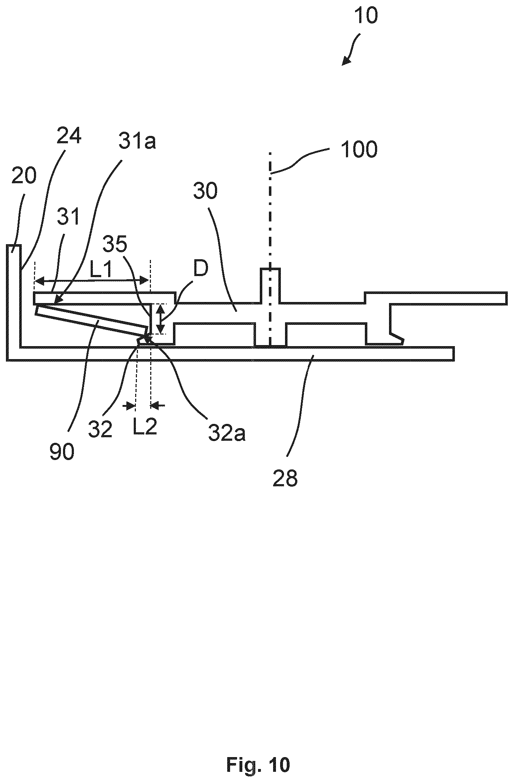

Fig. 10 zeigt eine stark schematische Schnittansicht einer Vorrichtung 10 zum Umlenken einer Förderkette 90. Von dem Gehäuse 20 sind lediglich schematisch Teile gezeigt, unter anderem die Bodenplatte 28 und die Innenoberfläche 24 des Gehäusekörpers. Das Umlenkrad 30 weist ein erstes Förderkettenführungselement 31 auf, das sich ausgehend von einem Außenumfang 35 des Umlenkrads 30 nach radial außen erstreckt. Das erste Förderkettenführungselement 31 weist einen ersten Förderkettenführungsabschnitt 31a auf, der auf der Unterseite des ersten Förderkettenführungselements 31 angeordnet ist.

Das Umlenkrad 30 weist außerdem ein zweites Förderkettenführungselement 32 auf, das sich ausgehend von dem Außenumfang 35 des Umlenkrads 30 ebenfalls nach radial außen erstreckt. Das zweite Förderkettenführungselement 32 weist einen zweiten Förderkettenführungsabschnitt 32a auf, der auf der Oberseite des zweiten Förderkettenführungselements 32 angeordnet ist.

Die Erstreckung L1 des ersten Förderkettenführungselements 31 in Richtung nach radial außen ist um ein Vielfaches größer, in dem hier gezeigten Ausführungsbeispiel mehr als viermal größer, als die Erstreckung L2 des zweiten Förderkettenführungselements 32 in Richtung nach radial außen.

Das erste Förderkettenführungselement 31 und das zweite Förderkettenführungselement 32 erstrecken sich in horizontaler Richtung und sind in vertikaler Richtung mit dem Abstand D voneinander beabstandet.

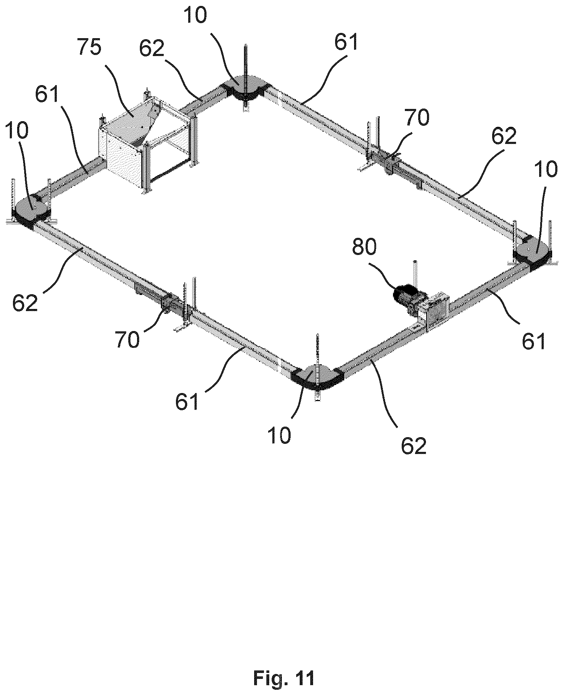

Fig. 11 zeigt eine perspektivische Ansicht eines Tierfuttermitteltransportsystems. Das Tierfuttermitteltransportsystem weist vier Vorrichtungen 10 auf. Eine endlose Förderkette erstreckt sich zwischen diesen Vorrichtungen 10. Zwischen den Vorrichtungen 10 sind mehrere Futtertröge 61, 62 vorgesehen, die dazu dienen das Futter für die Tiere bereitzustellen. Die Futtertröge 61, 62 sind in Form eines U-Profils ausgebildet.

Ferner ist eine elektrische Antriebseinheit 80 zum Antreiben der Förderkette vorgesehen, wobei die Antriebseinheit 80 ausgebildet ist, um die Förderkette beispielsweise mit einer Geschwindigkeit von 12 bis 18 m/min oder mit einer Geschwindigkeit von 36 m/min zu bewegen.

Außerdem sind zwei Kettenspanneinrichtungen 70 zum Spannen der Förderkette vorgesehen, wobei die Kettenspanneinrichtungen 70 jeweils zwischen zwei Futtertrögen 61, 62 angeordnet sind und dazu ausgebildet sind, um die Futtertröge 61, 62 auseinanderzudrücken und dadurch die Förderkette zu spannen.

Ferner ist ein Futterbehälter 75 vorgesehen, wobei sich die Förderkette zur Aufnahme von Tierfutter aus dem Futterbehälter 75 durch den Futterbehälter 75 hindurch erstreckt.

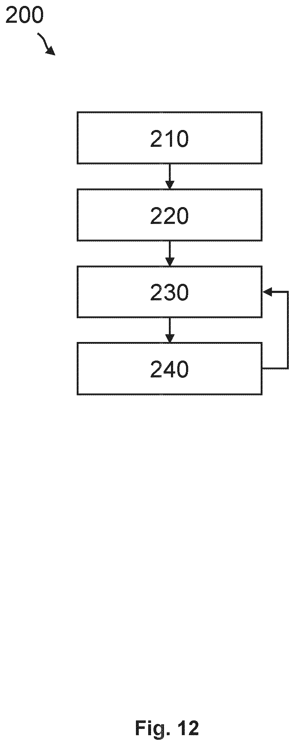

Fig. 12 zeigt eine schematische Darstellung eines Verfahrens 200 zur Umlenkung einer Förderkette, insbesondere zum Transport von Tierfuttermittel. Das Verfahren umfassend folgende Schritte:

In einem Schritt 210, Bereitstellen einer Vorrichtung 10 zur Umlenkung einer Förderkette 90, die Vorrichtung 10 umfassend ein Gehäuse 20 mit einer ersten Gehäuseöffnung 21 und einer zweiten Gehäuseöffnung 22, und ein Umlenkrad 30, wobei das Umlenkrad 30 innerhalb des Gehäuses 20 zwischen der ersten Gehäuseöffnung 21 und der zweiten Gehäuseöffnung 22 angeordnet ist, und wobei das Umlenkrad 30 drehbar um eine, vorzugsweise vertikale, Rotationsachse 100 gelagert ist, wobei das Umlenkrad 30 ein erstes Förderkettenführungselement 31 aufweist, das einen ersten Förderkettenführungsabschnitt 31a aufweist, und wobei das Umlenkrad 30 ein zweites Förderkettenführungselement 32 aufweist, das einen zweiten Förderkettenführungsabschnitt 32a aufweist.

In einem Schritt 220, Anordnen einer Förderkette 90, vorzugsweise umfassend eine Vielzahl von miteinander verbundenen Kettengliedern 91, 92, sodass die Förderkette 90 sich von der ersten Gehäuseöffnung 21 zur zweiten Gehäuseöffnung 22 erstreckt, wobei die Förderkette 90 entlang des Umlenkrads 30 zumindest abschnittsweise zwischen dem ersten Förderkettenelement 31 und dem zweiten Förderkettenelement 32, und insbesondere zwischen dem ersten Förderkettenführungsabschnitt 31a und dem zweiten Förderkettenführungsabschnitt 32a, angeordnet ist.

In einem Schritt 230, Bewegen der Förderkette 90 mittels einer Antriebseinheit 80 mit einer Geschwindigkeit von mindestens 10 m/min, vorzugsweise mindestens 12 m/min, und von höchstens 40 m/min, vorzugsweise höchstens 38 m/min. Dabei wird vorzugsweise die Förderkette 90 mit einer Geschwindigkeit im Bereich von 12 m/min bis 18 m/min oder mit einer Geschwindigkeit von 36 m/min bewegt. Das Bewegen der Förderkette erfolgt dabei höchstens 75 Minuten pro Tag, vorzugsweise höchstens 20 Minuten pro Tag, besonders bevorzugt höchstens 15 Minuten pro Tag.

In einem Schritt 240, Anhalten 240 der Förderkette 90 mittels Anhalten der Antriebseinheit 80. Anschließend werden die Schritte 230 und 240 fortlaufend abwechselnd nacheinander ausgeführt.

### Bezugszeichenliste

- 10: Vorrichtung
- 20: Gehäuse
- 21: erste Gehäuseöffnung
- 21a: erster Gehäuseöffnungsabschnitt
- 22: zweite Gehäuseöffnung
- 22a: zweiter Gehäuseöffnungsabschnitt
- 23: Auswölbung des Gehäusekörpers
- 24: Innenoberfläche des Gehäusekörpers
- 25: Gehäusekörper des Gehäuses
- 28: Bodenplatte
- 29: Deckel
- 30: Umlenkrad
- 31: erstes Förderkettenführungselement
- 31a: erster Förderkettenführungsabschnitt
- 32: zweites Förderkettenführungselement
- 32a: zweiter Förderkettenführungsabschnitt
- 35: Außenumfang des Umlenkrads
- 50: Vorrichtungshalteanordnung
- 51a, 51b: Ständer
- 52: Fußelement
- 55a, 55b: Drahtbügel
- 61, 62: Futtertrog
- 70: Kettenspanneinrichtungen
- 75: Futterbehälter
- 80: Antriebseinheit
- 90: Förderkette
- 91, 92: Kettenglied der Förderkette
- 100: Rotationsachse
- 200: Verfahren
- 210-240: Verfahrensschritte
- A: Detailansicht
- B: Detailansicht
- D: Abstand
- L1: Erstreckung des ersten Förderkettenführungselements nach radial außen
- L2: Erstreckung des zweiten Förderkettenführungselements nach radial außen

## Patentansprüche

1. Vorrichtung (10) zur Umlenkung, insbesondere zur Umlenkung um 90° oder 135°, einer Förderkette (90) zum Transport von Tierfuttermittel, die Vorrichtung (10) umfassend
- ein Gehäuse (20) mit einer ersten Gehäuseöffnung (21) und einer zweiten Gehäuseöffnung (22), und
- ein Umlenkrad (30) zum Führen und Umlenken einer Förderkette (90) von der ersten Gehäuseöffnung (21) des Gehäuses (20) zu der zweiten Gehäuseöffnung (22) des Gehäuses (20), wobei das Umlenkrad (30) innerhalb des Gehäuses (20) zwischen der ersten Gehäuseöffnung (21) und der zweiten Gehäuseöffnung (22) angeordnet ist, und wobei das Umlenkrad (30) drehbar um eine, vorzugsweise vertikale, Rotationsachse (100) gelagert ist,
wobei das Umlenkrad (30) ein erstes Förderkettenführungselement (31) aufweist, das sich ausgehend von einem Außenumfang (35) des Umlenkrads (30) nach radial außen erstreckt, wobei das erste Förderkettenführungselement (31) einen ersten Förderkettenführungsabschnitt (31a) aufweist,
und das Umlenkrad (30) ein zweites Förderkettenführungselement (32) aufweist, das sich ausgehend von dem Außenumfang (35) des Umlenkrads (30) nach radial außen erstreckt, wobei das zweite Förderkettenführungselement (32) einen zweiten Förderkettenführungsabschnitt (32a) aufweist,
wobei das erste Förderkettenführungselement (31) und das zweite Förderkettenführungselement (32) in Richtung der Rotationsachse (100) beabstandet zueinander angeordnet sind,
**dadurch gekennzeichnet, dass**
die Erstreckung (L1) des ersten Förderkettenführungselements (31) in Richtung nach radial außen um ein Vielfaches größer, nämlich mindestens viermal so groß, ist als die Erstreckung (L2) des zweiten Förderkettenführungselements (32) in Richtung nach radial außen.

2. Vorrichtung nach dem vorhergehenden Anspruch,
wobei die erste Gehäuseöffnung (21) und die zweite Gehäuseöffnung (22) bezogen auf die Rotationsachse (100) gedreht zueinander angeordnet sind, vorzugsweise bezogen auf die Rotationsachse (100) um mindestens 75° und höchstens 150°, insbesondere um 90° oder 135°, gedreht zueinander angeordnet sind.

3. Vorrichtung nach einem der vorhergehenden Ansprüche,
wobei der Abstand (D) in vertikaler Richtung zwischen der unteren Seite des ersten Förderkettenführungselements (31) und der oberen Seite des zweiten Förderkettenführungselements (32) mindestens 22 mm, besonders bevorzugt mindestens 18 mm, insbesondere 14,3 mm, beträgt.

4. Vorrichtung nach einem der vorhergehenden Ansprüche,
wobei das erste Förderkettenführungselement (31) sich ausgehend von dem Außenumfang (35) des Umlenkrads (30) parallel zu einer radialen Richtung (200), die orthogonal zur Rotationsachse (100) ausgerichtet ist, nach radial außen erstreckt, und/oder
wobei das zweite Förderkettenführungselement (32) sich ausgehend von dem Außenumfang (35) des Umlenkrads (30) parallel zu einer radialen Richtung (200), die orthogonal zur Rotationsachse (100) ausgerichtet ist, nach radial außen erstreckt.

5. Vorrichtung nach einem der vorhergehenden Ansprüche,
wobei der erste Förderkettenführungsabschnitt (31a) auf einer Unterseite des ersten Förderkettenführungselements (31) angeordnet ist, und/oder
wobei der zweite Förderkettenführungsabschnitt (32a) auf einer Oberseite des zweiten Förderkettenführungselements (32) angeordnet ist, und/oder
wobei der erste Förderkettenführungsabschnitt (31a) und der zweite Förderkettenführungsabschnitt (32a) einander zugewandt angeordnet sind.

6. Vorrichtung nach einem der vorhergehenden Ansprüche,
wobei sich das erste Förderkettenführungselement (31) weiter nach radial außen erstreckt als das zweite Förderkettenführungselement (32), und/oder
wobei die Erstreckung (L1) des ersten Förderkettenführungselements (31) in Richtung nach radial außen um ein Vielfaches größer, nämlich mindestens achtmal so groß, insbesondere mindestens zwölfmal so groß, ist als die Erstreckung (L2) des zweiten Förderkettenführungselements (32) in Richtung nach radial außen, und/oder
wobei die Erstreckung (L1) des ersten Förderkettenführungselements in Richtung nach radial außen mindestens 34 mm und/oder höchstens 50 mm beträgt, und/oder
wobei die Erstreckung (L2) des zweiten Förderkettenführungselements in Richtung nach radial außen mindestens 3 mm und/oder höchstens 8 mm beträgt, und/oder
wobei der erste Förderkettenführungsabschnitt (31a) und der zweite Förderkettenführungsabschnitt (32a) ausgebildet und angeordnet sind, um eine Förderkette (90) zwischen dem ersten Förderkettenführungsabschnitt (31a) und dem zweiten Förderkettenführungsabschnitt (32a) aufzunehmen.

7. Vorrichtung nach einem der vorhergehenden Ansprüche,
wobei das Gehäuse (20) einen Gehäusekörper (25) aufweist, wobei vorzugsweise der Gehäusekörper (25) Kunststoff, insbesondere thermoplastischen Kunststoff, umfasst oder daraus besteht, wobei der Gehäusekörper (25) vorzugsweise als ein Kunststoff-Spritzgussbauteil ausgebildet ist,
wobei vorzugsweise das Gehäuse (20) eine mit dem Gehäusekörper (25), vorzugsweise lösbar, verbundene Bodenplatte (28) aufweist, die vorzugsweise Stahl umfasst oder daraus besteht, wobei der Stahl vorzugsweise eine Härte nach EN ISO 6506-1 von weniger als 400 HBW, vorzugsweise weniger als 300 HBW, besonders bevorzugt weniger als 200 HBW, aufweist,
wobei vorzugsweise keine Kettenführungsschiene an der Innenoberfläche (24) des Gehäusekörpers (25) angeordnet ist.

8. Vorrichtung nach dem vorhergehenden Anspruch,
wobei das Gehäuse (20) im Bereich der ersten Gehäuseöffnung (21) mindestens ein, insbesondere integral mit dem Gehäusekörper (25) ausgebildetes, Futtertrogführungselement (26a, 26b) zur Führung eines Futtertroges (61) aufweist, wobei das Gehäuse (20) im Bereich der ersten Gehäuseöffnung (21) vorzugsweise zwei, insbesondere integral mit dem Gehäusekörper (25) ausgebildete Futtertrogführungselemente (26a, 26b) zur Führung eines Futtertroges (61) aufweist, und/oder
wobei das Gehäuse (20) im Bereich der zweiten Gehäuseöffnung (22) mindestens ein, vorzugsweise integral mit dem Gehäusekörper (25) ausgebildetes, Futtertrogführungselement (26a, 26b) zur Führung eines Futtertroges (62) aufweist, wobei das Gehäuse (20) im Bereich der zweiten Gehäuseöffnung (22) vorzugsweise zwei, insbesondere integral mit dem Gehäusekörper (25) ausgebildete Futtertrogführungselemente (26a, 26b) zur Führung eines Futtertroges (62) aufweist.

9. Vorrichtung nach dem vorhergehenden Anspruch,
wobei das im Bereich der ersten Gehäuseöffnung (21) angeordnete mindestens eine Futtertrogführungselement (26a, 26b) als mindestens ein in die erste Gehäuseöffnung (21) hineinragender Vorsprung, vorzugsweise mit einem L-förmigen Querschnitt ausgebildet ist, und/oder
wobei das im Bereich der zweiten Gehäuseöffnung (22) angeordnete mindestens eine Futtertrogführungselement (26a, 26b) als mindestens ein in die zweite Gehäuseöffnung (22) hineinragender Vorsprung, vorzugsweise mit einem L-förmigen Querschnitt, ausgebildet ist.

10. Vorrichtung nach einem der vorhergehenden Ansprüche, umfassend
- eine Vorrichtungshalteanordnung (50), umfassend mindestens einen, vorzugsweise zwei, Ständer (51a, 51b), und vorzugsweise ein mit dem mindestens einen Ständer (51a, 51b) verbundenes Fußelement (52),
- und mindestens einen, vorzugsweise zwei, Drahtbügel (55a, 55b), der mit dem Gehäuse (20) verbunden ist und ausgebildet ist, um die Vorrichtung an dem mindestens einen Ständer (51a, 51b) der Vorrichtungshalteanordnung (50) zu fixieren.

11. Tierfuttermitteltransportsystem zum Transport von Tierfuttermittel, umfassend
- mindestens eine Vorrichtung (10) nach einem der vorhergehenden Ansprüche, vorzugsweise mehrere, insbesondere vier, Vorrichtungen (10) nach einem der vorhergehenden Ansprüche,
- eine Förderkette (90), vorzugsweise umfassend eine Vielzahl von miteinander verbundenen Kettengliedern (91, 92), wobei sich die Förderkette (90) durch die mindestens eine Vorrichtung (10) hindurch erstreckt,
wobei vorzugsweise die Förderkette (90) zumindest abschnittsweise zwischen dem ersten Förderkettenelement (31) und dem zweiten Förderkettenelement (32), und insbesondere zwischen dem ersten Förderkettenführungsabschnitt (31a) und dem zweiten Förderkettenführungsabschnitt (32a), angeordnet ist,
das Tierfuttermitteltransportsystem vorzugsweise umfassend
- mindestens einen Futtertrog (61, 62), vorzugsweise ausgebildet in Form eines U-Profils, der vorzugsweise mit der mindestens einen Vorrichtung (10) verbunden ist, und/oder
- eine Antriebseinheit (80), vorzugsweise eine elektrische Antriebseinheit, zum Antreiben der Förderkette (90), wobei die Antriebseinheit (80) vorzugsweise ausgebildet ist, um die Förderkette (90) mit einer Geschwindigkeit von mindestens 10 m/min, vorzugsweise mindestens 12 m/min, und mit einer Geschwindigkeit von höchstens 40 m/min, vorzugsweise höchstens 38 m/min zu bewegen.

12. Tierfuttermitteltransportsystem nach dem vorhergehenden Anspruch, umfassend
- mindestens eine Kettenspanneinrichtung (70), vorzugsweise mehrere, insbesondere zwei, Kettenspanneinrichtungen (70), zum Spannen der Förderkette (90) und/oder
- einen Futterbehälter (75), wobei sich die Förderkette (90) zur Aufnahme von Tierfutter aus dem Futterbehälter (75) durch den Futterbehälter (75) hindurch erstreckt.

13. Tierfuttermitteltransportsystem nach einem der Ansprüche 11 und 12,
wobei der mindestens eine Futtertrog (61, 62) unmittelbar mit dem Gehäuse (20), vorzugsweise lösbar, verbunden ist,
wobei vorzugsweise der mindestens eine Futtertrog (61, 62) in das Gehäuse (20) in einem Bereich der ersten Gehäuseöffnung (21) und/oder der zweiten Gehäuseöffnung (22) einschiebbar ist.

14. Verfahren (200) zur Umlenkung einer Förderkette (90), insbesondere zum Transport von Tierfuttermittel, das Verfahren umfassend
- Bereitstellen (210) einer Vorrichtung (10) zur Umlenkung einer Förderkette (90), vorzugsweise einer Vorrichtung (10) nach einem der Ansprüche 1-10, die Vorrichtung (10) umfassend
∘ ein Gehäuse (20) mit einer ersten Gehäuseöffnung (21) und einer zweiten Gehäuseöffnung (22), und
∘ ein Umlenkrad (30), wobei das Umlenkrad (30) innerhalb des Gehäuses (20) zwischen der ersten Gehäuseöffnung (21) und der zweiten Gehäuseöffnung (22) angeordnet ist, und wobei das Umlenkrad (30) drehbar um eine, vorzugsweise vertikale, Rotationsachse (100) gelagert ist,
∘ wobei das Umlenkrad (30) ein erstes Förderkettenführungselement (31) aufweist, das sich ausgehend von einem Außenumfang (35) des Umlenkrads (30) nach radial außen erstreckt, wobei das erste Förderkettenführungselement einen ersten Förderkettenführungsabschnitt (31a) aufweist,
∘ und wobei das Umlenkrad (30) ein zweites Förderkettenführungselement (32) aufweist, das sich ausgehend von dem Außenumfang (35) des Umlenkrads (30) nach radial außen erstreckt, wobei das zweite Förderkettenführungselement einen zweiten Förderkettenführungsabschnitt (32a) aufweist,
∘ wobei das erste Förderkettenführungselement (31) und das zweite Förderkettenführungselement (32) in Richtung der Rotationsachse (100) beabstandet zueinander angeordnet sind,
∘ wobei die Erstreckung (L1) des ersten Förderkettenführungselements (31) in Richtung nach radial außen um ein Vielfaches größer, nämlich mindestens viermal so groß, ist als die Erstreckung (L2) des zweiten Förderkettenführungselements (32) in Richtung nach radial außen.
- Anordnen (220) einer Förderkette (90), vorzugsweise umfassend eine Vielzahl von miteinander verbundenen Kettengliedern (91, 92), sodass die Förderkette (90) sich von der ersten Gehäuseöffnung (21) zur zweiten Gehäuseöffnung (22) erstreckt wobei die Förderkette (90) entlang des Umlenkrads (30) zumindest abschnittsweise zwischen dem ersten Förderkettenelement (31) und dem zweiten Förderkettenelement (32), und insbesondere zwischen dem ersten Förderkettenführungsabschnitt (31a) und dem zweiten Förderkettenführungsabschnitt (32a), angeordnet ist,
- und vorzugsweise Bewegen (230) der Förderkette (90) mittels einer Antriebseinheit (80) mit einer Geschwindigkeit von mindestens 10 m/min, vorzugsweise mindestens 12 m/min, und von höchstens 40 m/min, vorzugsweise höchstens 38 m/min,
wobei vorzugsweise die Förderkette (90) beim Bewegen der Förderkette (90) durch die Vorrichtung (10) hindurch innerhalb der Vorrichtung (10) nur mit dem Umlenkrad (30) direkt in Kontakt steht und nicht direkt in Kontakt zu anderen Teilen der Vorrichtung (10) steht.

15. Verwendung einer Vorrichtung (10) nach einem der Ansprüche 1-10 und/oder eines Tierfuttermitteltransportsystems nach einem der Ansprüche 11-13 in einem Stall für Zuchttiere, insbesondere in einem Geflügelstall, zum Transport von Tiernahrung in dem Stall.

## Claims

1. Device (10) for deflecting, in particular for deflecting by 90° or 135°, a conveyor chain (90) for transporting animal feed, the device (10) comprising
- a housing (20) with a first housing opening (21) and a second housing opening (22), and
- a deflection wheel (30) for guiding and deflecting a conveyor chain (90) from the first housing opening (21) of the housing (20) to the second housing opening (22) of the housing (20), wherein the deflection wheel (30) is arranged within the housing (20) between the first housing opening (21) and the second housing opening (22), and wherein the deflection wheel (30) is mounted rotatably about a, preferably vertical, axis of rotation (100),
**characterized in that**
the deflection wheel (30) has a first conveyor chain guide element (31) which extends radially outwards from an outer circumference (35) of the deflection wheel (30), wherein the first conveyor chain guide element (31) has a first conveyor chain guide section (31a),
and the deflection wheel (30) has a second conveyor chain guide element (32) which extends radially outwards from the outer circumference (35) of the deflection wheel (30), wherein the second conveyor chain guide element (32) has a second conveyor chain guide section (32a),
wherein the first conveyor chain guide element (31) and the second conveyor chain guide element (32) are arranged distanced from one another in the direction of the axis of rotation (100),
wherein the extension (L1) of the first conveyor chain guide element (31) in the radially outward direction is many times greater, namely at least four times greater, than the extension (L2) of the second conveyor chain guide element (32) in the radially outward direction.

2. Device according to the preceding claim,
wherein the first housing opening (21) and the second housing opening (22) are arranged rotated relative to each other with respect to the axis of rotation (100), preferably rotated relative to each other by at least 75° and at most 150°, in particular by 90° or 135°, with respect to the axis of rotation (100).

3. Device according to one of the preceding claims,
wherein the distance (D) in the vertical direction between the lower side of the first conveyor chain guide element (31) and the upper side of the second conveyor chain guide element (32) is at least 22 mm, particularly preferably at least 18 mm, in particular 14.3 mm.

4. Device according to any one of the preceding claims,
wherein the first conveyor chain guide element (31) extends radially outwards from the outer circumference (35) of the deflection wheel (30) parallel to a radial direction (200) which is aligned orthogonally to the axis of rotation (100), and/or
wherein the second conveyor chain guide element (32) extends radially outwards from the outer circumference (35) of the deflection wheel (30) parallel to a radial direction (200) which is aligned orthogonally to the axis of rotation (100).

5. Device according to any one of the preceding claims,
wherein the first conveyor chain guide section (31a) is arranged on an underside of the first conveyor chain guide element (31), and/or
wherein the second conveyor chain guide section (32a) is arranged on an upper side of the second conveyor chain guide element (32), and/or
wherein the first conveyor chain guide section (31a) and the second conveyor chain guide section (32a) are arranged facing each other.

6. Device according to any one of the preceding claims,
wherein the first conveyor chain guide element (31) extends further radially outwards than the second conveyor chain guide element (32), and/or
wherein the extension (L1) of the first conveyor chain guide element (31) in the radially outward direction is many times greater, namely at least eight times greater, in particular at least twelve times greater, than the extension (L2) of the second conveyor chain guide element (32) in the radially outward direction, and/or
wherein the extension (L1) of the first conveyor chain guide element in the radially outward direction is at least 34 mm and/or at most 50 mm, and/or
wherein the extension (L2) of the second conveyor chain guide element in the radially outward direction is at least 3 mm and/or at most 8 mm, and/or
wherein the first conveyor chain guide section (31a) and the second conveyor chain guide section (32a) are formed and arranged to receive a conveyor chain (90) between the first conveyor chain guide section (31a) and the second conveyor chain guide section (32a).

7. Device according to any one of the preceding claims,
wherein the housing (20) has a housing body (25), wherein preferably the housing body (25) comprises or consists of plastic, in particular thermoplastic polymer, wherein the housing body (25) is preferably designed as a plastic injection-molded component,
wherein preferably the housing (20) has a base plate (28) which is connected, preferably detachably, to the housing body (25) and which preferably comprises or consists of steel, wherein the steel preferably has a hardness according to EN ISO 6506-1 of less than 400 HBW, preferably less than 300 HBW, particularly preferably less than 200 HBW.
wherein preferably no chain guide rail is arranged on the inner surface (24) of the housing body (25).

8. Device according to the preceding claim,
wherein the housing (20) in the region of the first housing opening (21) has at least one feeding trough guide element (26a, 26b), in particular formed integrally with the housing body (25), for guiding a feeding trough (61), wherein the housing (20) in the region of the first housing opening (21) preferably has two feeding trough guide elements (26a, 26b), in particular formed integrally with the housing body (25), for guiding a feeding trough (61), and/or
wherein the housing (20) in the region of the second housing opening (22) has at least one feeding trough guide element (26a, 26b), preferably formed integrally with the housing body (25), for guiding a feeding trough (62), wherein the housing (20) in the region of the second housing opening (22) preferably has two feeding trough guide elements (26a, 26b), in particular formed integrally with the housing body (25), for guiding a feeding trough (62).

9. Device according to the preceding claim,
wherein the at least one feeding trough guide element (26a, 26b) arranged in the region of the first housing opening (21) is designed as at least one projection projecting into the first housing opening (21), preferably with an L-shaped cross-section, and/or
wherein the at least one feeding trough guide element (26a, 26b) arranged in the region of the second housing opening (22) is designed as at least one projection projecting into the second housing opening (22), preferably with an L-shaped cross-section.

10. Device according to any one of the preceding claims, comprising
- a device holding arrangement (50), comprising at least one, preferably two, stands (51a, 51b), and preferably a foot element (52) connected to the at least one stand (51a, 51b),
- and at least one, preferably two, wire brackets (55a, 55b), which is connected to the housing (20) and is designed to fix the device to the at least one stand (51a, 51b) of the device holding arrangement (50).

11. Animal feed transport system for transporting animal feed, comprising
- at least one device (10) according to one of the preceding claims, preferably several, in particular four, devices (10) according to one of the preceding claims,
- a conveyor chain (90), preferably comprising a plurality of interconnected chain links (91, 92), wherein the conveyor chain (90) extends through the at least one device (10),
wherein preferably the conveyor chain (90) is arranged at least in sections between the first conveyor chain guide element (31) and the second conveyor chain guide element (32), and in particular between the first conveyor chain guide section (31a) and the second conveyor chain guide section (32a),
the animal feed transport system preferably comprising
- at least one feeding trough (61, 62), preferably in the form of a U-profile, which is preferably connected to the at least one device (10), and/or
- a drive unit (80), preferably an electric drive unit, for driving the conveyor chain (90), wherein the drive unit (80) is preferably designed to move the conveyor chain (90) at a speed of at least 10 m/min, preferably at least 12 m/min, and at a speed of at most 40 m/min, preferably at most 38 m/min.

12. Animal feed transport system according to any one of the preceding claims, comprising
- at least one chain tensioning device (70), preferably several, in particular two, chain tensioning devices (70), for tensioning the conveyor chain (90) and/or
- a feed container (75), wherein the conveyor chain (90) for receiving animal feed from the feed container (75) extends through the feed container (75).

13. Animal feed transport system according to any one of the preceding claims,
wherein the at least one feeding trough (61, 62) is directly connected, preferably detachably, to the housing (20),
wherein preferably the at least one feeding trough (61, 62) is pushable into the housing (20) in a region of the first housing opening (21) and/or the second housing opening (22).

14. Method (200) for deflecting a conveyor chain (90), in particular for transporting animal feed, the method comprising
- Providing (210) a device (10) for deflecting a conveyor chain (90), preferably a device (10) according to any one of claims 1-10, the device (10) comprising
∘ a housing (20) with a first housing opening (21) and a second housing opening (22), and
∘ a deflection wheel (30), wherein the deflection wheel (30) is arranged within the housing (20) between the first housing opening (21) and the second housing opening (22), and wherein the deflection wheel (30) is mounted rotatably about a, preferably vertical, axis of rotation (100),
∘ wherein the deflection wheel (30) has a first conveyor chain guide element (31) which has a first conveyor chain guide section (31a),
∘ and wherein the deflection wheel (30) has a second conveyor chain guide element (32) which has a second conveyor chain guide section (32a),
∘ wherein the first conveyor chain guide element (31) and the second conveyor chain guide element (32) are arranged distanced from one another in the direction of the axis of rotation (100),
∘ wherein the extension (L1) of the first conveyor chain guide element (31) in the radially outward direction is many times greater, namely at least four times greater, than the extension (L2) of the second conveyor chain guide element (32) in the radially outward direction.
- Arranging (220) a conveyor chain (90), preferably comprising a plurality of interconnected chain links (91, 92), so that the conveyor chain (90) extends from the first housing opening (21) to the second housing opening (22), wherein the conveyor chain (90) is arranged along the deflection wheel (30) at least in sections between the first conveyor chain guide element (31) and the second conveyor chain guide element (32), and in particular between the first conveyor chain guide section (31a) and the second conveyor chain guide section (32a),
- and preferably Moving (230) the conveyor chain (90) by means of a drive unit (80) at a speed of at least 10 m/min, preferably at least 12 m/min, and of at most 40 m/min, preferably at most 38 m/min.
wherein preferably the conveyor chain (90) is only in direct contact with the deflection wheel (30) when the conveyor chain (90) is moved through the device (10) within the device (10) and is not in direct contact with other parts of the device (10).

15. Use of a device (10) according to any one of claims 1-10 and/or an animal feed transport system according to any one of claims 11-13 in a barn for breeding animals, in particular in a poultry barn, for transporting animal feed in the barn.

## Revendications

1. Dispositif (10) de changement de direction, en particulier de changement de direction de 90° ou de 135°, d'une chaîne transporteuse (90) destinée à transporter des aliments pour animaux, le dispositif (10) comprenant
- un boîtier (20) avec une première ouverture de boîtier (21) et une deuxième ouverture de boîtier (22), et
- une roue de renvoi (30) destinée à guider et à changer la direction d'une chaîne transporteuse (90) de la première ouverture de boîtier (21) du boîtier (20) à la deuxième ouverture de boîtier (22) du boîtier (20), dans lequel la roue de renvoi (30) est agencée à l'intérieur du boîtier (20) entre la première ouverture de boîtier (21) et la deuxième ouverture de boîtier (22), et dans lequel la roue de renvoi (30) est logée de manière rotative autour d'un axe de rotation (100), de préférence vertical,
dans lequel la roue de renvoi (30) présente un premier élément de guidage de chaîne transporteuse (31), qui s'étend à partir d'une circonférence extérieure (35) de la roue de renvoi (30) radialement vers l'extérieur, dans lequel le premier élément de guidage de chaîne transporteuse (31) présente une première section de guidage de chaîne transporteuse (31a),
et la roue de renvoi (30) présente un deuxième élément de guidage de chaîne transporteuse (32), qui s'étend à partir de la circonférence extérieure (35) de la roue de renvoi (30) radialement vers l'extérieur, dans lequel le deuxième élément de guidage de chaîne transporteuse (32) présente une deuxième section de guidage de chaîne transporteuse (32a),
dans lequel le premier élément de guidage de chaîne transporteuse (31) et le deuxième élément de guidage de chaîne transporteuse (32) sont agencés à distance l'un de l'autre dans la direction de l'axe de rotation (100),
**caractérisé en ce que**
l'extension (L1) du premier élément de guidage de chaîne transporteuse (31) dans la direction radiale vers l'extérieur est supérieure d'un multiple, à savoir au moins quatre fois aussi grande, à l'extension (L2) du deuxième élément de guidage de chaîne transporteuse (32) dans la direction radiale vers l'extérieur.

2. Dispositif selon la revendication précédente,
dans lequel la première ouverture de boîtier (21) et la deuxième ouverture de boîtier (22) sont agencées tournées l'une par rapport à l'autre par rapport à l'axe de rotation (100), de préférence sont agencées tournées l'une par rapport à l'autre d'au moins 75° et de maximum 150°, en particulier de 90° ou de 135°, par rapport à l'axe de rotation (100).

3. Dispositif selon l'une quelconque des revendications précédentes,
dans lequel la distance (D) dans la direction verticale entre le côté inférieur du premier élément de guidage de chaîne transporteuse (31) et le côté supérieur du deuxième élément de guidage de chaîne transporteuse (32) est d'au moins 22 mm, de manière particulièrement préférée d'au moins 18 mm, en particulier de 14,3 mm.

4. Dispositif selon l'une quelconque des revendications précédentes,
dans lequel le premier élément de guidage de chaîne transporteuse (31) s'étend à partir de la circonférence extérieure (35) de la roue de renvoi (30) parallèlement à une direction radiale (200), qui est orientée orthogonalement à l'axe de rotation (100), radialement vers l'extérieur, et/ou
dans lequel le deuxième élément de guidage de chaîne transporteuse (32) s'étend à partir de la circonférence extérieure (35) de la roue de renvoi (30) parallèlement à une direction radiale (200), qui est orientée orthogonalement à l'axe de rotation (100), radialement vers l'extérieur.

5. Dispositif selon l'une quelconque des revendications précédentes,
dans lequel la première section de guidage de chaîne transporteuse (31a) est agencée sur un côté inférieur du premier élément de guidage de chaîne transporteuse (31), et/ou
dans lequel la deuxième section de guidage de chaîne transporteuse (32a) est agencée sur un côté supérieur du deuxième élément de guidage de chaîne transporteuse (32), et/ou
dans lequel la première section de guidage de chaîne transporteuse (31a) et la deuxième section de guidage de chaîne transporteuse (32a) sont agencées l'une en face de l'autre.

6. Dispositif selon l'une quelconque des revendications précédentes,
dans lequel le premier élément de guidage de chaîne transporteuse (31) s'étend plus radialement vers l'extérieur que le deuxième élément de guidage de chaîne transporteuse (32), et/ou
dans lequel l'extension (L1) du premier élément de guidage de chaîne transporteuse (31) dans la direction radiale vers l'extérieur est supérieure d'un multiple, à savoir au moins huit fois aussi grande, en particulier au moins douze fois aussi grande, à l'extension (L2) du deuxième élément de guidage de chaîne transporteuse (32) dans la direction radiale vers l'extérieur, et/ou
dans lequel l'extension (L1) du premier élément de guidage de chaîne transporteuse dans la direction radiale vers l'extérieur est d'au moins 34 mm et/ou de maximum 50 mm, et/ou dans lequel l'extension (L2) du deuxième élément de guidage de chaîne transporteuse dans la direction radiale vers l'extérieur est d'au moins 3 mm et/ou de maximum 8 mm, et/ou dans lequel la première section de guidage de chaîne transporteuse (31a) et la deuxième section de guidage de chaîne transporteuse (32a) sont réalisées et agencées pour recevoir une chaîne transporteuse (90) entre la première section de guidage de chaîne transporteuse (31a) et la deuxième section de guidage de chaîne transporteuse (32a).

7. Dispositif selon l'une quelconque des revendications précédentes,
dans lequel le boîtier (20) présente un corps de boîtier (25), dans lequel de préférence le corps de boîtier (25) comprend une matière plastique, en particulier un matériau thermoplastique, ou en est constitué, dans lequel le corps de boîtier (25) est réalisé de préférence sous la forme d'une pièce en matière plastique moulée par injection,
dans lequel de préférence le boîtier (20) présente une plaque de fond (28) reliée, de préférence de manière amovible, au corps de boîtier (25), qui comprend de préférence de l'acier ou en est constituée, dans lequel l'acier présente de préférence une dureté selon EN ISO 6506-1 inférieure à 400 HBW, de préférence inférieure à 300 HBW, de manière particulièrement préférée inférieure à 200 HBW,
dans lequel de préférence aucun rail de guidage de chaîne n'est agencé au niveau de la surface supérieure intérieure (24) du corps de boîtier (25).

8. Dispositif selon la revendication précédente,
dans lequel le boîtier (20) présente dans la zone de la première ouverture de boîtier (21) au moins un élément de guidage de mangeoire (26a, 26b), réalisé en particulier d'un seul tenant avec le corps de boîtier (25), destiné à guider une mangeoire (61), dans lequel le boîtier (20) présente dans la zone de la première ouverture de boîtier (21) de préférence deux éléments de guidage de mangeoire (26a, 26b), réalisés en particulier d'un seul tenant avec le corps de boîtier (25), destinés à guider une mangeoire (61), et/ou
dans lequel le boîtier (20) présente dans la zone de la deuxième ouverture de boîtier (22) au moins un élément de guidage de mangeoire (26a, 26b), réalisé de préférence d'un seul tenant avec le corps de boîtier (25), destiné à guider une mangeoire (62), dans lequel le boîtier (20) présente dans la zone de la deuxième ouverture de boîtier (22) de préférence deux éléments de guidage de mangeoire (26a, 26b), réalisés en particulier d'un seul tenant avec le corps de boîtier (25), destinés à guider une mangeoire (62).

9. Dispositif selon la revendication précédente,
dans lequel l'au moins un élément de guidage de mangeoire (26a, 26b) agencé dans la zone de la première ouverture de boîtier (21) est réalisé sous la forme d'au moins une saillie pénétrant dans la première ouverture de boîtier (21), de préférence avec une section transversale en forme de L, et/ou
dans lequel l'au moins un élément de guidage de mangeoire (26a, 26b) agencé dans la zone de la deuxième ouverture de boîtier (22) est réalisé sous la forme d'au moins une saillie pénétrant dans la deuxième ouverture de boîtier (22), de préférence avec une section transversale en forme de L.

10. Dispositif selon l'une quelconque des revendications précédentes, comprenant
- un agencement de maintien de dispositif (50), comprenant au moins un, de préférence deux, montant (51a, 51b) et de préférence un élément formant pied (52) relié à l'au moins un montant (51a, 51b),
- et au moins un, de préférence deux, étrier métallique (55a, 55b), qui est relié au boîtier (20) et est réalisé pour fixer le dispositif au niveau de l'au moins un montant (51a, 51b) de l'agencement de maintien de dispositif (50).

11. Système de transport d'aliments pour animaux destiné à transporter des aliments pour animaux, comprenant
- au moins un dispositif (10) selon l'une quelconque des revendications précédentes, de préférence plusieurs, en particulier quatre, dispositifs (10) selon l'une quelconque des revendications précédentes,
- une chaîne transporteuse (90), comprenant de préférence une pluralité de maillons de chaîne (91, 92) reliés les uns aux autres, dans lequel la chaîne transporteuse (90) s'étend à travers l'au moins un dispositif (10),
dans lequel de préférence la chaîne transporteuse (90) est agencée au moins par section entre le premier élément de chaîne transporteuse (31) et le deuxième élément de chaîne transporteuse (32), et en particulier entre la première section de guidage de chaîne transporteuse (31a) et la deuxième section de guidage de chaîne transporteuse (32a),
le système de transport d'aliments pour animaux comprenant de préférence
- au moins une mangeoire (61, 62), réalisée de préférence sous la forme d'un profil en U, qui est reliée de préférence à l'au moins un dispositif (10), et/ou
- une unité d'entraînement (80), de préférence une unité d'entraînement électrique, destinée à entraîner la chaîne transporteuse (90), dans lequel l'unité d'entraînement (80) est réalisée de préférence pour déplacer la chaîne transporteuse (90) à une vitesse d'au moins 10 m/min, de préférence d'au moins 12 m/min, et à une vitesse de maximum 40 m/min, de préférence de maximum 38 m/min.

12. Système de transport d'aliments pour animaux selon la revendication précédente, comprenant
- au moins un dispositif tendeur de chaîne (70), de préférence plusieurs, en particulier deux, dispositifs tendeurs de chaîne (70), destiné à tendre la chaîne transporteuse (90) et/ou
- un récipient d'aliments pour animaux (75), dans lequel la chaîne transporteuse (90) s'étend à travers le récipient d'aliments pour animaux (75) pour la réception d'aliments pour animaux en provenance du récipient d'aliments pour animaux (75).

13. Système de transport d'aliments pour animaux selon l'une quelconque des revendications 11 et 12,
dans lequel l'au moins une mangeoire (61, 62) est reliée directement au boîtier (20), de préférence de manière amovible,
dans lequel de préférence l'au moins une mangeoire (61, 62) peut être insérée dans le boîtier (20) dans une zone de la première ouverture de boîtier (21) et/ou de la deuxième ouverture de boîtier (22).

14. Procédé (200) de changement de direction d'une chaîne transporteuse (90), en particulier destinée à transporter des aliments pour animaux, le procédé comprenant
- la mise à disposition (210) d'un dispositif (10) de changement de direction d'une chaîne transporteuse (90), de préférence d'un dispositif (10) selon l'une quelconque des revendications 1-10, le dispositif (10) comprenant
∘ un boîtier (20) avec une première ouverture de boîtier (21) et une deuxième ouverture de boîtier (22), et
∘ une roue de renvoi (30), dans lequel la roue de renvoi (30) est agencée à l'intérieur du boîtier (20) entre la première ouverture de boîtier (21) et la deuxième ouverture de boîtier (22), et dans lequel la roue de renvoi (30) est logée de manière rotative autour d'un axe de rotation (100), de préférence vertical,
∘ dans lequel la roue de renvoi (30) présente un premier élément de guidage de chaîne transporteuse (31), qui s'étend à partir d'une circonférence extérieure (35) de la roue de renvoi (30) radialement vers l'extérieur, dans lequel le premier élément de guidage de chaîne transporteuse présente une première section de guidage de chaîne transporteuse (31a),
∘ et dans lequel la roue de renvoi (30) présente un deuxième élément de guidage de chaîne transporteuse (32), qui s'étend à partir de la circonférence extérieure (35) de la roue de renvoi (30) radialement vers l'extérieur, dans lequel le deuxième élément de guidage de chaîne transporteuse présente une deuxième section de guidage de chaîne transporteuse (32a),
∘ dans lequel le premier élément de guidage de chaîne transporteuse (31) et le deuxième élément de guidage de chaîne transporteuse (32) sont agencés à distance l'un de l'autre dans la direction de l'axe de rotation (100),
o dans lequel l'extension (L1) du premier élément de guidage de chaîne transporteuse (31) dans la direction radiale vers l'extérieur est supérieure d'un multiple, à savoir au moins quatre fois aussi grande, à l'extension (L2) du deuxième élément de guidage de chaîne transporteuse (32) dans la direction radiale vers l'extérieur,
- l'agencement (220) d'une chaîne transporteuse (90), comprenant de préférence une pluralité de maillons de chaîne (91, 92) reliés les uns aux autres, de sorte que la chaîne transporteuse (90) s'étend de la première ouverture de boîtier (21) à la deuxième ouverture de boîtier (22), dans lequel la chaîne transporteuse (90) est agencée le long de la roue de renvoi (30) au moins par section entre le premier élément de chaîne transporteuse (31) et le deuxième élément de chaîne transporteuse (32), et en particulier entre la première section de guidage de chaîne transporteuse (31a) et la deuxième section de guidage de chaîne transporteuse (32a),
- et de préférence le déplacement (230) de la chaîne transporteuse (90) au moyen d'une unité d'entraînement (80) à une vitesse d'au moins 10 m/min, de préférence d'au moins 12 m/min, et de maximum 40 m/min, de préférence de maximum 38 m/min,
dans lequel de préférence la chaîne transporteuse (90) lors du déplacement de la chaîne transporteuse (90) à travers le dispositif (10) est en contact direct uniquement avec la roue de renvoi (30) à l'intérieur du dispositif (10) et n'est pas en contact direct avec d'autres pièces du dispositif (10).

15. Utilisation d'un dispositif (10) selon l'une quelconque des revendications 1-10 et/ou d'un système de transport d'aliments pour animaux selon l'une quelconque des revendications 11-13 dans une étable pour animaux d'élevage, en particulier dans un poulailler, destiné à transporter des aliments pour animaux dans l'étable.
